(19) Europäisches Patentamt
European Patent Office
Office européen des brevets

(11) EP 3 870 618 B1

(12) **EUROPÄISCHE PATENTSCHRIFT**

(45) Veröffentlichungstag und Bekanntmachung des Hinweises auf die Patenterteilung:
**12.07.2023 Patentblatt 2023/28**

(21) Anmeldenummer: **19786806.0**

(22) Anmeldetag: **18.10.2019**

(51) Internationale Patentklassifikation (IPC):
***C08F 290/06*** *(2006.01)* ***C08G 18/10*** *(2006.01)*
***C08G 18/22*** *(2006.01)* ***C08G 18/32*** *(2006.01)*
***C08G 18/34*** *(2006.01)* ***C08G 18/42*** *(2006.01)*
***C08G 18/48*** *(2006.01)* ***C08G 18/66*** *(2006.01)*
***C08G 18/67*** *(2006.01)* ***C08G 18/72*** *(2006.01)*
***C08G 18/75*** *(2006.01)* ***C08G 18/79*** *(2006.01)*
***C09D 175/04*** *(2006.01)* ***C08G 18/28*** *(2006.01)*
***C08G 18/83*** *(2006.01)*

(52) Gemeinsame Patentklassifikation (CPC):
(C-Sets verfügbar)
**C08G 18/672; C08G 18/10; C08G 18/227; C08G 18/282; C08G 18/3206; C08G 18/348; C08G 18/4216; C08G 18/4825; C08G 18/6659; C08G 18/6692; C08G 18/673; C08G 18/725; C08G 18/755; C08G 18/792; C08G 18/833;**

(Forts.)

(86) Internationale Anmeldenummer:
**PCT/EP2019/078307**

(87) Internationale Veröffentlichungsnummer:
**WO 2020/083754 (30.04.2020 Gazette 2020/18)**

(54) **WÄSSRIGE BINDEMITTELFORMULIERUNG AUF BASIS VON FUNKTIOALISIERTEN POLYURETHANEN**

AQUEOUS BINDER FORMULATION BASED ON FUNCTIONALIZED POLYURETHANES

FORMULATION DE LIANT AQUEUSE CONTENTANT DES POLYURÉTHANES FONCTIONALISÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.10.2018 EP 18202800**

(43) Veröffentlichungstag der Anmeldung:
**01.09.2021 Patentblatt 2021/35**

(73) Patentinhaber: **BASF SE**
**67056 Ludwigshafen am Rhein (DE)**

(72) Erfinder: **PAULUS, Wolfgang**
**67056 Ludwigshafen (DE)**

(74) Vertreter: **BASF IP Association**
**BASF SE**
**GBI-C006**
**67056 Ludwigshafen (DE)**

(56) Entgegenhaltungen:
**EP-A2- 0 332 326**

- **DATABASE WPI Week 201720 Thomson Scientific, London, GB; AN 2016-78938E XP002796124, & CN 106 188 563 A (UNIV SOUTH CHINA TECHNOLOGY) 7. Dezember 2016 (2016-12-07)**
- **DATABASE WPI Week 200974 Thomson Scientific, London, GB; AN 2009-P78312 XP002796125, & CN 101 544 738 A (UNIV SUN YAT SEN) 30. September 2009 (2009-09-30)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)
**C09D 175/04**

C-Sets
**C08G 18/10, C08G 18/302;**
**C08G 18/10, C08G 18/3228;**
**C08G 18/10, C08G 18/3234;**
**C08G 18/10, C08G 18/3271;**
**C08G 18/672, C08G 18/0823**

## Beschreibung

Gegenstand der vorliegenden Erfindung ist eine wässrige Bindemittelformulierung enthaltend

a) ein Polyurethan A, und

b) ein Carbonsäurehydrazid B, wobei

das Polyurethan A erhältlich ist durch Umsetzung von

a1) wenigstens einem Di- und/oder Polyisocyanat (Komponente A1), mit
a2) wenigstens einer organischen Verbindung mit wenigstens zwei Hydroxygruppen, welche sich von den Komponenten A3, A4 und A6 unterscheidet (Komponente A2),
a3) wenigstens einer organischen Verbindung mit wenigstens einer gegenüber einer Isocyanatgruppe reaktiven Gruppe und wenigstens einer dispergierend wirkenden Gruppe oder wenigstens einer in eine dispergierend wirkende Gruppe überführbare funktionelle Gruppe, welche sich von den Komponenten A2, A4 und A6 unterscheidet (Komponente A3),
a4) wenigstens einer organischen Verbindung mit wenigstens einer gegenüber einer Isocyanatgruppe reaktiven Gruppe und wenigstens einer gegebenenfalls substituierten Acryloyloxygruppe, welche sich von den Komponenten A2, A3 und A6 unterscheidet (Komponente A4),
a5) optional wenigstens einer organischen Verbindung mit lediglich einer gegenüber einer Isocyanatgruppe reaktiven Gruppe, welche sich von den Komponenten A3 und A4 unterscheidet (Komponente A5), und
a6) optional wenigstens einer organischen Verbindung mit wenigstens zwei gegenüber einer Isocyanatgruppe reaktiven Gruppen, welche sich von den Komponenten A2 bis A4 unterscheidet (Komponente A6),

wobei keine der Komponenten A1 bis A6 eine oder mehrere aldehydische und/oder ketonische Carbonylgruppen enthält.

Gegenstand der vorliegenden Erfindung sind ferner die Verwendung der wässrigen Bindemittelformulierung in verschiedenen Anwendungen, ein Verfahren zum Beschichten von Substraten mit der wässrigen Bindemittelformulierung sowie die nach dem Beschichtungsverfahren erhältlichen Substrate.

Strahlungshärtbare wasseremulgierbare Polyurethan(meth)acrylate und diese enthaltenden Beschichtungsformulierungen sind vielfach vorbeschrieben und dem Fachmann daher bekannt.

So sind in Wasser dispergierbare Urethanacrylate beispielsweise bereits bekannt aus der EP-A 98752 oder der DE-OS 2936039. Die Hydrophilie dieser bekannten Systeme basiert auf der Anwesenheit von ionischen Zentren, insbesondere von Carboxylat- oder Sulfonatgruppen, die als Gegenionen Alkalikationen oder Ammoniumionen aufweisen. Die oftmals vorliegenden Amine (zur Neutralisierung oder zum Molmassenaufbau) können eine Vergilbung der Lacke bewirken. Der angestrebte Molmassenaufbau ist jedoch erforderlich, um die Klebrigkeit der Filme herabzusetzen.

Weitere strahlungshärtbare wasseremulgierbare Polyurethan(meth)acrylate sind beispielsweise bekannt aus EP-A 694531, DE-A 19525489, DE-A 19810793, DE-A 19933012, DE-A 19957604 oder EP-A 1591502.

Allen aus den genannten Schriften erhältlichen Produkten ist gemein, dass die Herstellung der darin beschriebenen Polyurethan(meth)acrylate die Umsetzung mit mindestens einem Di- oder Polyamin umfasst.

Des Weiteren offenbart die DE 10 2010 003308 wasseremulgierbare Urethan(meth)acrylate, bei denen auf die Zugabe von Aminen zur Kettenverlängerung verzichtet wird, um die Vergilbung zu verringern.

Ferner offenbart die WO 2014/63920 strahlungshärtbare, wasserlösliche oder -dispergierbare Urethan(meth)acrylate, in denen als Stopper beim Urethanaufbau mit einem oder zwei Kohlenwasserstoffresten substituierte Amine eingesetzt werden, in denen die Kohlenwasserstoffreste gemeinsam mindestens 12 Kohlenstoffatome aufweisen.

Auch aus den Internationalen Anmeldungen WO 2008/098972 und WO 2010/018074 sind wässrige Dispersionen von Urethan(meth)acrylaten sowie deren Verwendung für Ink-Jet- und Druckanwendungen bekannt.

Charakteristisch an den vorgenannten strahlungshärtbaren, wasseremulgierbaren Polyurethan(meth)acrylaten und diese enthaltenden Beschichtungsformulierungen ist jedoch, dass sie nach Auftrag auf ein Substrat ausschließlich unter Einwirkung energiereicher Strahlung, beispielsweise UV- Strahlung oder Elektronenstrahlung aushärten. Problematisch an der Aushärtung der vorgenannten strahlungshärtbaren, wasseremulgierbaren Polyurethan(meth)acrylaten und diese enthaltenden Beschichtungsformulierungen auf Substraten ist jedoch, dass sie in Schattenbereichen, d.h. in Bereichen in denen die energiereiche Strahlung aufgrund einer gegebenen, von einer ebenen Fläche abweichenden komplexen Substratform, bei An- oder Aufbauten, Zwischenräumen, Seitenflächen und/oder Unterseiten ebener, flächiger Substrate oder infolge der in einer Beschichtungsformulierung enthaltenen strahlungsundurchlässigen Feststoffpartikel, wie insbesondere Pigmente und/oder Füllstoffe, nicht hingelangt, nicht oder nur unzureichend erfolgt. Entsprechendes gilt auch für den Fall, wenn die entsprechenden strahlungshärtbaren, wasseremulgierbaren Polyurethan(meth)acrylaten und diese enthaltenden Beschichtungsformulierungen auf ein Substrat in Form dicker Schichten aufgebracht werden, welche die energiereiche Strahlung in der Tiefe nicht oder nur unzureichend zu durchdringen vermag.

Bei der Verwendung von Hydraziden in Bindemittelformulierungen ist von folgendem Stand der Technik auszugehen.

So werden in der EP-A 332326 wässrige, selbstvernetztende Beschichtungssysteme offenbart, deren Bindemittel aus einem carbonylgruppenhaltigen Polyurethan und einem carbonylgruppenhaltigen Polyacrylat besteht, welche mit Adipinsäuredihydrazid vernetzt werden. Nachteilig an diesem System ist die geringere Vernetzungsdichte, da das Adipinsäuredihydrazid nur zweimal reagieren kann und die entsprechende Vernetzungsreaktion reversibel ist.

Gemäß der WO 2016/000989 werden Ein- oder Zweikomponentenbeschichtungsmassen offenbart, welche spezifische Zweistufendispersionspolymerisate sowie gegebenenfalls noch ein Polyurethan als Bindemittel enthalten. Für den Fall, dass die Zweistufendispersionspolymerisate Keto-, Aldehyd- und/oder Acetoacetoxy-Carbonylgruppen aufweisen, wird darauf hingewiesen, dass die Beschichtungsmassen zusätzlich noch Vernetzungsmittel, wie u.a. organische Verbindungen mit zwei oder mehreren Hydrazidgruppen, wie beispielsweise Adipinsäuredihydrazid, Oxalsäuredihydrazid, Phthalsäurehydrazid und Terephthalsäurehydrazid enthalten können.

CN101544738 beschreibt wässrige selbst-vernetzende Polyurethanpolyacrylatharze, welche eine Hydrazidgruppe und eine Carbonylgruppe tragen. Die Polyurethanpolyacryaltharze werden in einem zweistufigen Verfahren hergestellt. In einem ersten Schritt wird ein Polyurethan hergestellt, welches 2-Hydroxyethylacrylat und Adipinsäuredihydrazid als Aufbaukomponente enthält. In einem zweiten Schritt werden Acrylat Monomere enthaltend Diacetonacrylamid in Gegenwart des Polyurethans polymerisiert.

Aufgabe der vorliegenden Erfindung war es daher, wässrige Bindemittelformulierungen auf Basis von acryloyloxygruppenfunktionaliserter Polyurethane, welche keinerlei aldehydische und/oder ketonische Carbonylgruppen aufweisen, zur Verfügung zu stellen, welche lagerstabil sind, sowohl unter Einwirkung wie auch in Abwesenheit energiereicher Strahlung auszuhärten vermögen und Beschichtungen mit hoher Vernetzungsdichte bzw. mit hoher Pendelhärte ausbilden.

Die Aufgabe wurde durch die Bereitstellung der eingangs definierten Bindemittelformulierung gelöst.

Wesentliche Komponente der erfindungsgemäßen Bindemittelformulierung ist ein Polyurethan A, welches erhältlich ist durch die Umsetzung von

a1) wenigstens einem Di- und/oder Polyisocyanat (Komponente A1), mit

a2) wenigstens einer organischen Verbindung mit wenigstens zwei Hydroxygruppen, welche sich von den Komponenten A3 und A4 unterscheidet (Komponente A2),

a3) wenigstens einer organischen Verbindung mit wenigstens einer gegenüber einer Isocyanatgruppe reaktiven Gruppe und wenigstens einer dispergierend wirkenden Gruppe oder wenigstens einer in eine dispergierend wirkende Gruppe überführbare funktionelle Gruppe, welche sich von den Komponenten A2 und A4 unterscheidet (Komponente A3),

a4) wenigstens einer organischen Verbindung mit wenigstens einer gegenüber einer Isocyanatgruppe reaktiven Gruppe und wenigstens einer gegebenenfalls substituierten Acryloyloxygruppe, welche sich von den Komponenten A2 und A4 unterscheidet (Komponente A4),

a5) optional wenigstens einer organischen Verbindung mit lediglich einer gegenüber einer Isocyanatgruppe reaktiven Gruppe, welche sich von den Komponenten A3 und A4 unterscheidet (Komponente A5), und

a6) optional wenigstens einer organischen Verbindung mit wenigstens zwei gegenüber einer Isocyanatgruppe reaktiven Gruppen, welche sich von den Komponenten A2 bis A4 unterscheidet (Komponente A6),

wobei keine der Komponenten A1 bis A6 eine oder mehrere aldehydische und/oder ketonische Carbonylgruppen enthält.

Bei der Komponente A1 handelt es sich um wenigstens ein Di- und/oder Polyisocyanat.

Dabei können die eingesetzten Di- oder Polyisocyanate sowohl aromatischer wie auch aliphatischer Struktur sein, wobei aliphatische Di- oder Polyisocyanate bevorzugt sind.

Aromatische Di- oder Polyisocyanate sind solche, die mindestens ein aromatisches Ringsystem enthalten, also sowohl rein aromatische wie auch araliphatische Verbindungen.

Bei den aliphatischen Di- oder Polyisocyanate kommen sowohl acyclische wie auch cyloaliphatische Verbindungen in Betracht.

Cycloaliphatische Di- oder Polyisocyanate sind solche, die mindestens ein cycloaliphatisches Ringsystem enthalten, während acyclische Di- oder Polyisocyanate ausschließlich gerade oder verzweigte nichtcyclische Kohlenwasserstoffreste aufweisen. Aliphatische Di- oder Polyisocyanate enthalten keinerlei aromatische Ringsysteme.

Die erfindungsgemäß einsetzbaren Diisocyante weisen lediglich zwei Isocyanatgruppen auf, während die Polyisocyanatverbindungen mehr als zwei Isocyanatgruppen aufweisen. Von Bedeutung ist aber, dass erfindungsgemäß

als Komponente A1 auch die Umsetzungsprodukte der Di- oder Polyisocyanate mit sich selbst (Oligomerisierungsreaktionen der Isocyanatgruppen) umfasst sein sollen.

Beispiele für erfindungsgemäße Diisocyanate sind acyclische Diisocyanate, wie Tetramethylendiisocyanat, Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanats, (z.B. Methyl- oder Ethyl-2,6-diisocyanato-hexanoat), Trimethylhexyldiisocyanat oder Tetramethylhexyldiisocyanat, cycloaliphatische Diisocyanate, wie 1,4-, 1,3- oder 1,2-Diisocyanatocyclohexan, 4,4'- oder 2,4'-Di(isocyanatocyclohexyl)methan, 1-Isocyanato-3,3,5-trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanatomethyl)-tricyclo[5.2.1.0$^{2.6}$]decan-Isomerengemische, sowie aromatische und araliphatische Diisocyanate, wie 2,4- oder 2,6-Toluylendiisocyanat und deren Isomerengemische, m- oder p-Xylylendiisocyanat, Diphenylmethandiisocyanat (MDI), insbesondere 2,2'-Diphenylmethandiisocyanat (2,2'-MDI), 2,4'-Diphenylmethandiisocyanat (2,4'-MDI) oder 4,4'-Diphenylmethandiisocyanat (4,4'-MDI) und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldi-phenylmethan-4,4'-diisocyanat, $\alpha, \alpha, \alpha', \alpha'$-Tetramethyl-m-xylylendiisocyanat, 1,4-Diisocyanatobenzol oder Diphenylether-4,4'-diisocyanat.

Besonders bevorzugt sind aliphatische Diisocyanate, wobei Hexamethylendiisocyanat, Pentamethylendiisocyanat und Isophorondiisocyanat besonders bevorzugt sind.

Beispiele für Polyisocyanate sind Triisocyanate, wie Triisocyanatononan, 2'-Isocyanatoethyl-(2,6-diisocyanatohexanoat), 2,4,6-Triisocyanatotoluol, Triphenylmethantriisocyanat oder 2,4,4'-Triisocyanatodiphenylether oder die Gemische aus Di-, Tri- und höheren Polyisocyanaten, die beispielsweise durch Phosgenierung von entsprechenden Anilin/Formaldehyd-Kondensaten erhalten werden und Methylenbrücken aufweisende Polyphenylpolyisocyanate darstellen.

Von Bedeutung ist ferner, dass zu den erfindungsgemäß einsetzbaren Polyisocyanaten auch die Oligomerisierungsprodukte der vorgenannten Diisocyanate zählen sollen, welche in der Regel eine mittlere NCO-Funktionalität von mindestens 2 aufweisen, welche jedoch bis zu 8 betragen kann. Bevorzugt liegt die mittlere NCO-Funktionalität im Bereich von 2 bis 5 und besonders bevorzugt im Bereich von 2,4 bis 4. Dabei liegt der Gehalt an Isocyanatgruppen nach der Oligomerisierung, berechnet als NCO = 42 g/mol, in der Regel im Bereich von 5 bis 50 Gew.-%.

Erfindungsgemäß sind aber auch folgende Polyisocyanate als Komponente A1 mit umfasst:

1) Isocyanuratgruppen aufweisende Polyisocyanate von aromatischen, acyclischen oder cycloaliphatischen Diisocyanaten. Besonders bevorzugt sind hierbei die entsprechenden acyclischen oder cycloaliphatischen Isocyanatoisocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Trisisocyanatocycloalkylisocyanurate, welche cyclische Trimere der Diisocyanate darstellen, oder um Gemische mit ihren höheren, mehr als einen Isocyanuratring aufweisenden Homologen. Die Isocyanatoisocyanurate haben im Allgemeinen einen NCO-Gehalt von 10 bis 30 Gew.-%, insbesondere 15 bis 25 Gew.-% und eine mittlere NCO-Funktionalität von 2,6 bis 8. Besonders bevorzugt ist das Isocyanatoisocyanurat des Hexamethylendiisocyanats.
Die Isocyanuratgruppen aufweisenden Polyisocyanate können in geringerem Umfang auch Urethan- und/oder Allophanat-Gruppen enthalten, bevorzugt mit einem Gehalt gebundenen Alkohols von kleiner 2 Gew.-% bezogen auf das Polyisocyanat.

2) Uretdiongruppen aufweisende Polyisocyanate mit aromatisch, acyclisch oder cycloaliphatisch gebundenen Isocyanatgruppen, vorzugsweise acyclisch oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten. Die Uretdiongruppen aufweisenden Polyisocyanate werden häufig im Gemisch mit anderen Polyisocyanaten, insbesondere den unter 1) genannten, erhalten. Uretdiongruppen aufweisende Polyisocyanate weisen üblicherweise Funktionalitäten im Bereich von 2 bis 3 auf.

3) Biuretgruppen aufweisende Polyisocyanate mit aromatisch, cycloaliphatisch oder acyclisch gebundenen, bevorzugt cycloaliphatisch oder acyclisch gebundenen Isocyanatgruppen, insbesondere Tris-(6-isocyanatohexyl)-biuret oder dessen Gemische mit seinen höheren Homologen. Diese Biuretgruppen aufweisenden Polyisocyanate weisen im Allgemeinen einen NCO-Gehalt im Bereich von 18 bis 24 Gew.-% und eine mittlere NCO-Funktionalität im Bereich von 2,8 bis 6 auf.

4) Urethan- und/oder Allophanatgruppen aufweisende Polyisocyanate mit aromatisch, acyclisch oder cycloaliphatisch gebundenen, bevorzugt acyclisch oder cycloaliphatisch gebundenen Isocyanatgruppen, wie sie beispielsweise durch Umsetzung von überschüssigen Mengen an Diisocyanat, beispielsweise Hexamethylendiisocyanat oder Isophorondiisocyanat, mit ein- oder mehrwertigen Alkoholen. Diese Urethan- und/oder Allophanatgruppen aufweisenden Polyisocyanate haben im Allgemeinen einen NCO-Gehalt im Bereich von 12 bis 24 Gew.-% und eine mittlere NCO-Funktionalität im Bereich von 2,0 bis 4,5. Diese Urethan- und/oder Allophanatgruppen aufweisenden Polyisocyanate treten häufig in Mischformen mit den unter 1) genannten Polyisocyanaten auf.

5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid zugänglich.

6) Iminooxadiazindiongruppen enthaltende Polyisocyanate, vorzugsweise von Hexamethylendiisocyanat oder Isophorondiisocyanat abgeleitet. Solche Iminooxadiazindiongruppen enthaltenden Polyisocyanate sind aus Diisocyanaten mittels spezieller Katalysatoren herstellbar.

7) Uretonimin-modifizierte Polyisocyanate.

8) Carbodiimid-modifizierte Polyisocyanate.

9) Hyperverzweigte Polyisocyanate, wie sie beispielsweise aus der DE-A 10013186 oder DE-A 10013187 bekannt sind.

10) Polyurethan/Polyisocyanat-Präpolymere, aus Di- und/oder Polyisocyanaten mit Alkoholen.

11) Polyharnstoff-Polyisocyanat-Präpolymere.

12) Die Polyisocyanate 1) bis 11), bevorzugt 1), 3), 4) und 6) können nach deren Herstellung in Biuretgruppen- oder Urethan-/Allophanat-Gruppen aufweisende Polyisocyanate mit aromatisch, cycloaliphatisch oder acyclisch gebundenen, bevorzugt cycloaliphatisch oder acyclisch gebundenen Isocyanatgruppen, überführt werden. Die Bildung von Biuretgruppen erfolgt beispielsweise durch Zugabe von Wasser oder Umsetzung mit Aminen. Die Bildung von Urethan- und/oder Allophanatgruppen erfolgt durch Umsetzung mit ein-, zwei- oder mehrwertigen, bevorzugt einwertigen Alkoholen, optional in Gegenwart von geeigneten Katalysatoren. Diese Biuret- oder Urethan-/Allophanatgruppen aufweisenden Polyisocyanate weisen im Allgemeinen einen NCO-Gehalt im Bereich von 10 bis 25 Gew.-% und eine mittlere NCO-Funktionalität im Bereich von 3 bis 8 auf.

13) Hydrophil modifizierte Polyisocyanate, d.h. Polyisocyanate, die neben den unter 1) bis12) beschriebenen Gruppen solche enthalten, die formal durch Addition von Molekülen mit NCO-reaktiven Gruppen und hydrophilierenden Gruppen an die Isocyanatgruppen obiger Moleküle entstehen. Bei Letzteren handelt es sich um nichtionische Gruppen wie Alkyl-Polyethylenoxid und/oder ionische, welche von Phosphorsäure, Phosphonsäure, Schwefelsäure oder Sulfonsäure, bzw. ihren Salzen abgeleitet sind.

14) Modifizierte Polyisocyanate für Dual Cure Anwendungen, d.h. Polyisocyanate, die neben den unter 1) bis 11) beschriebenen Gruppen solche enthalten, die formal durch Addition von Molekülen mit NCO-reaktiven Gruppen und durch energiereiche Strahlung, wie insbesondere UV- oder aktinische Strahlung vernetzbare Gruppen an die Isocyanatgruppen obiger Moleküle entstehen. Bei diesen Molekülen handelt es sich beispielsweise um Hydroxyalkyl(meth)acrylate und andere Hydroxy-Vinylverbindungen.

In einer bevorzugten Ausführungsform wird als Di- oder Polyisocyanat Isophorondiisocyanat, das Isocyanatoisocyanurat des Hexamethylendiisocyanats und/oder doppelbindungshaltige Allophonate auf Basis des Hexamethylendiisocyanats, welches beispielsweise von BASF SE unter dem Produktnamen Laromer® 9000 vertrieben wird, eingesetzt.

Bei den aromatischen Di- oder Polyisocyanaten wird in einer Ausführungsform vorteilhaft 2,2'-MDI, 2,4'-MDI, 4,4'-MDI und/oder oligomeres MDI, das aus höherkernigen Homologen des MDI, welche mindestens 3 aromatische Kerne und eine Isocyanat-Funktionalität von >2 aufweisen, besteht, oder Roh-MDI, welches bei der Herstellung von MDI anfällt, eingesetzt. In einer weiteren Ausführungsform werden Mischungen aus mindestens einem Oligomer des MDI und mindestens einem der vorgenannten niedermolekularen MDI-Derivate 2,2'-MDI, 2,4'-MDI oder 4,4'-MDI (derartige Mischungen werden auch als polymeres MDI bezeichnet) eingesetzt.

Die (mittlere) Funktionalität eines Polyisocyanates, welches polymeres MDI enthält, kann im Bereich von ungefähr 2,2 bis ungefähr 4 variieren, insbesondere von 2,5 bis 3,8 und insbesondere von 2,7 bis 3,5. Eine solche Mischung von MDI-basierten mehrfunktionellen Isocyanaten mit unterschiedlichen Funktionalitäten ist insbesondere das Roh-MDI, das bei der Herstellung von MDI als Zwischenprodukt erhalten wird.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat® M20 oder Lupranat® M50 vertrieben.

In einer bevorzugten Ausführungsform wird als Komponente A1 wenigstens ein aliphatisches Di- und/oder Polyisocyanat eingesetzt, wobei Isophorondiisocyanat und/oder das Isocyanatoisocyanurat des Hexamethylendiisocyanats besonders bevorzugt sind.

Als erfindungsmäßige Komponente A2 wird eine organische Verbindung mit wenigstens zwei Hydroxygruppen eingesetzt. Dabei kann als Komponente A2 wenigstens eine molekulare Verbindung mit einem Molekulargewicht ≤ 500 g/mol und/oder wenigstens eine polymere Verbindung mit einem mittleren Molekulargewicht > 500 g/mol eingesetzt werden.

Dabei können die eingesetzten organischen Verbindungen mit wenigstens zwei Hydroxygruppen sowohl aromatischer wie auch aliphatischer Struktur sein, wobei solche mit aliphatischer Struktur bevorzugt sind.

Aromatische molekulare und/oder polymere Verbindungen mit wenigstens zwei Hydroxygruppen sind solche, die mindestens ein aromatisches Ringsystem enthalten, also sowohl rein aromatische wie auch araliphatische Verbindungen.

Bei den aliphatischen molekularen und/oder polymeren Verbindungen mit wenigstens zwei Hydroxygruppen kommen sowohl acyclische wie auch cycloaliphatische Verbindungen in Betracht.

Cycloaliphatische molekulare und/oder polymere Verbindungen mit wenigstens zwei Hydroxygruppen sind solche, die mindestens ein cycloaliphatisches Ringsystem enthalten, während acyclische organische molekulare und/oder polymere Verbindungen mit wenigstens zwei Hydroxygruppen ausschließlich gerade oder verzweigte nichtcyclische Kohlenwasserstoffreste aufweisen. Aliphatische molekulare und/oder polymere Verbindungen mit wenigstens zwei Hydroxygruppen enthalten keinerlei aromatische Ringsysteme.

Als molekulare Komponente A2 bevorzugt sind solche Verbindungen, die lediglich zwei Hydroxygruppen aufweisen, wobei aliphatische Diole insbesondere bevorzugt sind.

Als Beispiele für molekulare acyclische Komponenten A2 seien genannt: Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol Heptan-1,7-diol, Octan-1,8-diol, Octan-1,2-diol, Nonan-1,9-diol, Decan-1,2-diol, Decan-1,10-diol, Dodecan-1,2-diol, Dodecan-1,12-diol, 1,5-Hexadien-3,4-diol, 2,2-Dimethylpropan-1,3-diol (Neopentylglykol), 2-Methylpentan-2,4-diol, 2,4-Dimethylpentan-2,4-diol, 2-Ethylhexan-1,3-diol, 2,5-Dimethylhexan-2,5-diol, 2,2,4-Trimethylpentan-1,3-diol, Pinacol, Diethylenglykol, Triethylenglykol, Dipropylenglykol und/oder Tripropylenglykol.

Bevorzugt eingesetzte molekulare acyclische Komponenten A2 sind Ethylenglykol, Propan-1,2-diol, Propan-1,3-diol, Butan-1,4-diol, Pentan-1,5-diol, Hexan-1,6-diol und/oder Octan-1,8-diol.

Beispiele für cycloaliphatische Diole sind 1,2- und 1,3-Cyclopentandiole, 1,2-, 1,3- und 1,4-Cyclohexandiole, 1,1-, 1,2-, 1,3- und 1,4-Bis-(Hydroxymethyl)cyclohexane, 1,1-, 1,2-, 1,3- und 1,4-Bis(Hydroxyethyl)cyclohexane, Isosorbid und Bis-(4-hydroxycyclohexan)isopropyliden.

Bevorzugt sind 1,2-, 1,3- und 1,4-Cyclohexandiol, 1,3- und 1,4-Bis(hydroxymethyl)cyclohexan und Bis-(4-hydroxycyclohexan)isopropyliden.

Als Komponenten A2, welche mehr als zwei Hydroxygruppen aufweisen seien beispielhaft genannt: Trimethylolbutan, Trimethylolpropan, Trimethylolethan, Pentaerythrit, Glyzerin, Ditrimethylolpropan, Dipentaerythrit, Ditrimethylolethan, Sorbit, Mannit, Diglycerol, Threit, Erythrit, Adonit (Ribit), Arabit (Lyxit), Xylit, Dulcit (Galactit), Maltit oder Isomaltit.

Als polymere Komponente A2 können vorteilhaft ein Polyesterol, ein Polyetherol und/oder ein Polycarbonatol eingesetzt werden, dessen OH-Zahl, gemessen analog DIN EN ISO 4629-1, im Bereich ≥ 40 und ≤ 200 mg KOH/g Polymer und dessen Säurezahl, gemessen nach DIN 53240, im Bereich < 20 mg KOH/g Polymer liegt. Dabei wird in Abweichung zur DIN EN ISO 4629-1 bei der Bestimmung der OH-Zahl auf 95 °C anstatt auf lediglich 50 °C erhitzt. Alle anderen Maßnahmen werden wie in der DIN EN ISO 4629-1 beschrieben ausgeführt. Vorteilhaft liegen die gewichtsmittleren Molekulargewichte der vorgenannten polymeren Komponenten A2 im Bereich > 400 und ≤ 5000 g/mol und besonders vorteilhaft im Bereich ≥ 500 und ≤ 2000 g/mol. Die gewichtsmittleren Molekulargewichte werden im Rahmen dieser Schrift mittels Gelpermeationschromatographie unter Verwendung geeichter Standards ermittelt.

Bei den erfindungsgemäß einsetzbaren Polyetherolen handelt es sich vorteilhaft im Wesentlichen um Polyalkylenoxide der allgemeinen Formel $HO[AO]_nH$, wobei AO für Ethylenoxid, Propylenoxid, 1,2-Epoxybutan und/oder 2,3-Epoxybutan und n für eine Zahl ≥ 7 steht. Dabei können bei deren Herstellung durch säure- oder basenkatalysierten Umsetzung mit Wasser die Alkylenoxide jeweils einzeln und/oder als Gemisch eingesetzt werden, wobei Polyalkylenglykole, welche nur aus einem Alkylenoxid, wie insbesondere Polyethylenglykole oder Polypropylenglykole oder aus zwei oder mehr Alkylenoxiden gebildet werden, wobei die dabei erhaltenen Polyalkylenglykole die jeweiligen zwei oder mehr Alkylenoxide - je nach Herstellvariante - im statistischen Gemisch oder in Form von Blöcken enthalten, gebildet werden. Zu den erfindungsgemäß einsetzbaren Polyetherolen zählen auch Polytetramethylenglykole, welche durch

säurekatalysierte Polymerisation von Tetrahydrofuran zugänglich sind. Die entsprchenden Herstellungsweisen der vorgenannten Polyertherolen sind dem Fachmann geläufig.

Polycarbonatole, also hydroxyfunktionalisierte Polycarbonate, sind u.a. durch Umsetzung der vorgenannten molekularen Diolkomponenten A2, insbesondere der aliphatischen Diolkomponenten A2 und insbesondere bevorzugt der acyclischen Diolkomponenten A2 mit Phosgen oder Kohlensäurediethylester bzw. Kohlensäuredimethylester unter Abtrennung von Salzsäure bzw. von Ethanol oder Methanol, zugänglich.

Erfindungsgemäß vorteilhaft werden Polycarbonatole auf Basis von Ethylenglykol, Neopentylglykol, 1,4-Butandiol, 1,6-Hexandiol, 1,4-Cyclohexandimethanol, Bisphenol A und/oder Bisphenol S als polymere Komponente A2 eingesetzt.

Die erfindungsgemäß als polymere Komponente A2 einsetzbaren Polyesterole sind prinzipiell durch Umsetzung von monomeren oder polymeren Diolen mit Dicarbonsäurekomponenten zugänglich, wobei Polyesterole auf Basis monomerer aliphatischer Diole, insbesondere auf Basis monomerer acyclische Diole vorteilhaft sind.

Bei den Dicarbonsäurebausteinen kann es sich dabei um die freien Dicarbonsäuren oder deren Derivate handeln.

Unter Derivaten werden bevorzugt verstanden

- die betreffenden Anhydride in monomerer oder auch polymerer Form,
- Mono- oder Dialkylester, bevorzugt Mono- oder Di-$C_1$-$C_4$-alkylester, besonders bevorzugt Mono- oder Dimethylester oder die entsprechenden Mono- oder Diethylester,
- ferner Mono- und Divinylester sowie
- gemischte Ester, bevorzugt gemischte Ester mit unterschiedlichen $C_1$-$C_4$-Alkyl-komponenten, besonders bevorzugt gemischte Methylethylester.

$C_1$-$C_4$-Alkyl bedeutet im Rahmen dieser Schrift Methyl, Ethyl, iso-Propyl, n-Propyl, n-Butyl, iso-Butyl, sek-Butyl und tert-Butyl, bevorzugt Methyl, Ethyl und n-Butyl, besonders bevorzugt Methyl und Ethyl und ganz besonders bevorzugt Methyl.

Als Beispiele für molekulare acyclische Diole seien genannt: Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol Heptan-1,7-diol, Octan-1,8-diol, Octan-1,2-diol, Nonan-1,9-diol, Decan-1,2-diol, Decan-1,10-diol, Dodecan-1,2-diol, Dodecan-1,12-diol, 1,5-Hexadien-3,4-diol, 2,2-Dimethylpropan-1,3-diol, 2-Methylpentan-2,4-diol, 2,4-Dimethylpentan-2,4-diol, 2-Ethylhexan-1,3-diol, 2,5-Dimethylhexan-2,5-diol, 2,2,4-Trimethylpentan-1,3-diol, Pinacol, Diethylenglykol, Triethylenglykol, Dipropylenglykol und/oder Tripropylenglykol.

Bevorzugt eingesetzte molekulare acyclische Diole sind Ethylenglykol, Propan-1,2-diol, Propan-1,3-diol, Butan-1,4-diol, Pentan-1,5-diol, Hexan-1,6-diol, 2,2-Dimethylpropan-1,3-diol und/oder Octan-1,8-diol.

Beispiele für cycloaliphatische Diole sind 1,2- und 1,3-Cyclopentandiole, 1,2-, 1,3- und 1,4-Cyclohexandiole, 1,1-, 1,2-, 1,3- und 1,4-Bis-(Hydroxymethyl)cyclohexane, 1,1-, 1,2-, 1,3- und 1,4-Bis(Hydroxyethyl)cyclohexane und Bis-(4-hydroxycyclohexan)isopropyliden.

Bevorzugte cycloaliphatische Diole sind 1,2-, 1,3- und 1,4-Cyclohexandiol, 1,3- und 1,4-Bis(hydroxymethyl)cyclohexan und Bis-(4-hydroxycyclohexan)isopropyliden.

Bei den polymeren Diolen handelt es sich im Wesentlichen um die voran beschriebenen Polyalkylenoxide der allgemeinen Formel $HO[AO]_nH$, wobei AO für Ethylenoxid, Propylenoxid, 1,2-Epoxybutan und/oder 2,3-Epoxybutan und n für eine Zahl $\geq 7$ steht. Werden solche polymeren Diole zur Herstellung der Polyesterolen eingesetzt, so finden insbesondere die entsprechenden Polyethylenglykole Verwendung.

Bevorzugt werden zur Herstellung der erfindungsgemäß vorteilhaften Polyesterole jedoch die acyclischen Diole Ethylenglykol, Propan-1,2-diol, Propan-1,3-diol, Butan-1,4-diol, Pentan-1,5-diol, Hexan-1,6-diol, 2,2-Dimethylpropan-1,3-diol und/oder Octan-1,8-diol eingesetzt.

Bei den Dicarbonsäurebausteinen werden vorteilhaft die freien Dicarbonsäuren oder deren Anhydrid eingesetzt, wobei diese sowohl eine aromatische wie auch eine aliphatische Struktur aufweisen können. Bei den aliphatischen Dicarbonsäuren finden sowohl solche mit acyclischer wie auch solche mit cycloaliphatischer Struktur Verwendung.

Beispiele für Dicarbonsäuren mit acyclischer Struktur sind $C_2$-$C_{16}$-Dissäuren, wie insbesondere Oxalsäure, Malonsäure, Maleinsäure, Fumarsäure, Bernsteinsäure, Glutarsäure, Adipinsäure, Pimelinsäure, Korksäure, Azelainsäure, Sebacinsäure, Undecandisäure, Dodecandisäure.

Beispiele für cycloaliphatische Dicarbonsäuren sind cis- und trans-Cyclohexan-1,2-dicarbonsäure (Hexahydrophthalsäuren), cis- und trans-Cyclohexan-1,3-dicarbonsäure, cis- und trans-Cyclohexan-1,4-dicarbonsäure, 1,2-, 1,3- oder 1,4-Cyclohex-4-endicarbonsäure (Tetrahydrophthalsäuren), cis- und trans-Cyclopentan-1,2-dicarbonsäure, cis- und trans-Cyclopentan-1,3-dicarbonsäure.

Beispiele für aromatische Dicarbonsäuren sind Phthalsäure, Isophthalsäure, Terephthalsäure und Phthalsäureanhydrid, bevorzugt sind Phthalsäure und Isophthalsäure, besonders bevorzugt ist Phthalsäure.

Vorteilhaft werden als Dicarbonsäurebausteine Bernsteinsäure, Adipinsäure, Sebacinsäure, Maleinsäure, Fumarsäure, Phthalsäure, Isophthalsäure, Terephthalsäure und/oder Phthlsäureandhydrid eingesetzt.

Erfindungsgemäß besonders vorteilhaft sind Polyesterole auf Basis von Hexan-1,6-diol, Ethylenglykol, Propylen-1,2-diol und/oder Neopentylglykol als Diolkomponente und Adipinsäure, Phthalsäure, Isophthalsäure und/oder Sebacinsäure als Dicarbonsäurekomponente, wobei Polyesterole auf Basis von Hexan-1,6-diol, Adipinsäure und Isophthalsäure, Hexan-1,6-diol, Adipinsäure und Phthalsäure und/oder von Propylen-1,2-diol, Butan-1,4-diol und Adipinsäure.

Von Bedeutung ist jedoch, dass die Polyesterole noch in untergeordnetem Maße Monocarbonsäuren, wie beispielsweise Ölsäure, und höherfunkionalisierte Alkohole, wie beispielsweise Trimethylolpropan oder Pentaerythrit, als zusätzliche Bausteine enthalten können.

Als erfindungsgemäße Komponente A3 wird wenigstens eine organische Verbindung mit wenigstens einer gegenüber einer Isocyanatgruppe reaktiven Gruppe und wenigstens einer dispergierend wirkenden Gruppe oder wenigstens einer in eine dispergierend wirkende Gruppe überführbare funktionelle Gruppe eingesetzt.

Mögliche Komponenten A3 sind daher solche mit der allgemeinen Formel

$$RG\text{-}R^1\text{-}DG,$$

worin

RG wenigstens eine gegenüber einer Isocyanatgruppe reaktive Gruppe,
$R^1$ einen 1 bis 20 Kohlenstoffatome aufweisenden acyclischen, cycloaliphatischen oder aromatischen Rest, und
DG wenigstens eine dispergierend wirkende Gruppe

bedeuten.

Beispiele für gegenüber einer Isocyanatgruppe reaktiven Gruppen RG sind insbesondere -OH, - SH, $-NH_2$ oder $-NHR^2$, worin $R^2$ die für $R^1$ angegebene Bedeutung hat, jedoch von dem dort verwendeten Rest verschieden sein kann. Als gegenüber einer Isocyanatgruppe reaktiven Gruppen bevorzugt sind -OH oder $-NH_2$, wobei die OH-Gruppe ganz besonders bevorzugt ist.

DG steht vorteilhaft für eine Säuregruppe, insbesondere eine Carbonsäuregruppe (-COOH), eine Sulfonsäuregruppe ($-SO_3H$) oder eine Phosphorigsäuregruppe ($-PO_3H$), wobei die Carbonsäuregruppe und die Sulfonsäuregruppe bevorzugt sind und die Carbonsäuregruppe insbesondere bevorzugt ist, sowie deren anionischen Formen, denen erfindungsgemäß ein beliebiges Alkalimetallion oder das Ammoniumion als Gegenion assoziiert sein kann, z.B. $Li^+$, $Na^+$, $K^+$ oder $NH_4^+$.

$R^1$ steht beispielsweise für Methylen, 1,2-Ethylen, 1,2-Propylen, 1,3-Propylen, 1,2-Butylen, 1,4-Butylen, 1,3-Butylen, 1,6-Hexylen, 1,8-Octylen, 1,12-Dodecylen, 1,2-Phenylen, 1,3-Phenylen, 1,4-Phenylen, 1,2-Naphthylen, 1,3-Naphthylen, 1,4-Naphthylen, 1,6-Naphthylen, 1,2-Cyclopentylen, 1,3-Cyclopentylen, 1,2-Cyclohexylen, 1,3-Cyclohexylen oder 1,4-Cyclohexylen.

Bei der Komponente A3 handelt es sich daher in einer Ausführungsform um eine Verbindung, die wenigstens eine gegenüber Isocyanat reaktive Gruppe und mindestens eine Säuregruppe als dispergierend wirkende Gruppe aufweist.

Bei solchen Komponenten A3 handelt es sich beispielsweise um Hydroxyessigsäure, Weinsäure, Milchsäure, 3-Hydroxypropionsäure, Hydroxypivalinsäure, Mercaptoessigsäure, Mercaptopropionsäure, Thiomilchsäure, Mercaptobernsteinsäure, Glycin, Iminodiessigsäure, Sarkosin, Alanin, β-Alanin, Leucin, Isoleucin, Aminobuttersäure, Hydroxybernsteinsäure, Hydroxydecansäure, Ethylendiamintriessigsäure, Hydroxydodecansäure, Hydroxyhexadecansäure, 12-Hydroxystearinsäure, Aminonaphthalincarbonsäure, Hydroxethansulfonsäure, Hydroxypropansulfonsäure, Mercaptoethansulfonsäure, Mercaptopropansulfonsäure, Aminomethansulfonsäure, Taurin, Aminopropansulfonsäure, N-alkylierte oder N-cycloalkylierte Aminopropan- oder - ethansulfonsäuren, beispielsweise N-Cyclohexylaminoethansulfonsäure oder N-Cyclohexylaminopropansulfonsäure, sowie deren Alkali- Erdalkali- oder Ammoniumsalze und besonders bevorzugt um die genannten Monohydroxycarbon- und -sulfonsäuren sowie Monoaminocarbon- und -sulfonsäuren.

Zur Herstellung des Polyurethans A werden die vorgenannten Säuren, falls es sich nicht schon um Salze handelt, mit einer Base, wie insbesondere ein Alkalimetallhydroxid oder tertiären Aminen, wie beispielsweise Triethylamin, Tri-n-butylamin, Methyldiethanolamin oder Dimethylethanolamin teilweise oder vollständig neutralisiert.

Zu den Komponenten A3 zählen auch die Polyethoxylate der nachfolgenden Formel

$$RG\text{-}EO_x\text{-}C_1\text{-}C_4\text{-Alkyl},$$

wobei

RG die oben angegebene Bedeutung hat und insbesondere für die OH-Gruppe steht,
EO für die $-CH_2-CH_2-O-$Gruppe steht, und
x für eine Zahl $\geq 4$ und $\leq 100$ und besonders vorteilhaft für eine Zahl $\geq 8$ und $\leq 60$ steht

Ebenfalls zu den Komponenten A3 zählen die Verbindungen folgender Formel

$$RG-R^1-RG^*-R^{1*}-DG,$$

wobei

RG die oben angegebene Bedeutung hat und insbesondere für die $NH_2$-Gruppe steht,
$R^1$ die oben angegebene Bedeutung hat und insbesondere für 1,2-Ethylen, 1,2-Propylen, 1,3-Propylen, 1,2-Butylen, 1,4-Butylen, 1,3-Butylen und insbesondere bevorzugt für 1,2-Ethylen steht,
RG* für -O-, -S-, -NH- oder $-NR^2-$ und insbesondere für -NH- steht, wobei $R^2$ die oben angegebene Bedeutung hat,
$R^{1*}$ die für $R^1$ angegebene Bedeutung hat, jedoch von dem dort verwendeten Rest verschieden sein kann und insbesondere für 1,2-Ethylen, 1,2-Propylen, 1,3-Propylen, 1,2-Butylen, 1,4-Butylen, 1,3-Butylen und insbesondere bevorzugt für 1,2-Ethylen steht und
DG die oben angegebene Bedeutung hat und insbesondere für die Carbonsäuregruppe und die Sulfonsäuregruppe bzw. deren genannten Salze steht.

Entsprechende Produkte und ihre Herstellung sind dem Fachmann geläufig und im Markt verfügbar, beispielsweise Diaminoalkansulfonate und Deaminoalkancarbonsäuren, wie beispielsweise (2-Aminoethyl)-2-aminoethansulfonsäure, (2-Aminoethyl)-3-aminopropansäure oder (4-Aminobutyl)-3-aminopropansäure.

Mögliche, wenn auch weniger bevorzugte Komponenten A3 enthalten genau eine gegenüber Isocyanatgruppen reaktive Gruppe und mindestens eine anionische oder in eine anionische Gruppe überführbare hydrophile Gruppe. Dabei handelt es sich beispielsweise um solche, wie sie in der EP-A 703255, dort besonders von Seite 3, Zeile 54 bis Seite 4, Zeile 38, in der DE-A 19724199, dort besonders von Seite 3, Zeilen 4 bis 30, in der DE-A 4010783, dort besonders von Spalte 3, Zeilen 3 bis 40, in der DE-A 4113160, dort besonders von Spalte 3, Zeile 63 bis Spalte 4, Zeile 4 und in der EP-A 548669, dort besonders von Seite 4, Zeile 50 bis Seite 5, Zeile 6 beschrieben sind. Auf diese Schriften wird im Rahmen der vorliegenden Offenbarung hiermit ausdrücklich Bezug genommen.

In einer bevorzugten Ausführungsform weist Komponente A3 als wenigstens eine gegenüber einer Isocyanatgruppe reaktive Gruppe wenigstens eine Hydroxy- und/oder wenigstens eine primäre Aminogruppe und als wenigstens eine dispergierend wirkende Gruppe eine Säuregruppe auf, wobei die Carbonsäuregruppe insbesondere bevorzugt ist.

In einer bevorzugten Ausführungsform handelt es sich bei der Komponente A3 um eine Verbindung mit genau zwei Hydroxygruppen und genau einer Säuregruppe, wobei die Carbonsäuregruppe besonders bevorzugt ist.

Beispiele für die bevorzugten Carbonsäuren mit zwei Hydroxygruppen sind 2,2-(Dimethylol)propionsäure, 2,2-(Dimethylol)buttersäure und 2,2-(Dimethylol)pentansäure, wobei 2,2-(Dimethylol)propionsäure und 2,2-(Dimethylol)buttersäure besonders bevorzugt sind und 2,2-(Dimethylol)propionsäure insbesondere bevorzugt ist.

Bei der für das Polyurethan A essentiellen Komponenten A4 handelt es sich um wenigstens eine organische Verbindung mit wenigstens einer gegenüber einer Isocyanatgruppe reaktiven Gruppe und wenigstens einer gegebenenfalls substituierten Acryloyloxygruppe.

Bei der Komponente A4 handelt es sich um wenigstens eine Verbindung mit wenigstens einer, bevorzugt einer oder zwei gegenüber einer Isocyanatgruppe reaktiven Gruppe(n) und wenigstens einer, bevorzugt einer oder zwei gegebenenfalls substituierte Acryloyloxygruppe(n).

Komponenten A4 können somit beispielsweise Monoester von $\alpha, \beta$-ungesättigten Carbonsäuren, wie Acrylsäure, Methacrylsäure, Crotonsäure oder Mono- oder Diester von $\alpha, \beta$- ungesättigten Dicarbonsäure, wie beispielsweise Itaconsäure, Fumarsäure, Maleinsäure, oder Acrylamidoglykolsäure oder Methacrylamidoglykolsäure mit Di- oder Polyolen sein, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-ethandiol, Dipropylenglykol, Triethylenglykol, Tetraethylenglykol, Pentaethylenglykol, Tripropylenglykol, 1,2-, 1,3- oder 1,4-Butandiol, Pentan-1,5-diol, Neopentylglykol, Hexan-1,6-diol, 2-Methylpentan-1,5-diol, 2-Ethylbutan-1,4-diol, 1,4-(Dimethylol)cyclohexan, 2,2-Bis(4-hydroxycyclohexyl)propan, Glyzerin, Trimethylolethan, Trimethylolpropan, Trimethylolbutan, Pentaerythrit, Ditrimethylolpropan, Erythrit, Sorbit, Poly-Tetrahydrofuran mit einem Molgewicht zwischen 162 und 2000, Poly-1,3-propandiol mit einem Molgewicht zwischen 134 und 400 oder Polyethylenglykol mit einem Molgewicht zwischen 238 und 458. Weiterhin können auch Ester oder Amide der (Meth)acrylsäure mit Aminoalkoholen, wie beispielsweise 2-Aminoethanol, 2-(Methylamino)ethanol, 3-Aminopropanol, 1-Aminopropan-2-ol oder 2-(2-Aminoethoxy)ethanol oder Polyaminoalkane, wie Ethylendiamin oder Diethylentriamin oder Vinylessigsäure als Komponente A4 verwendet werden.

Beispiele für Amide ethylenisch ungesättigter Carbonsäuren mit Aminoalkoholen sind Hydroxyalkyl(meth)acrylamide wie N-Hydroxymethylacrylamid, N-Hydroxymethylmethacrylamid, N-Hydroxyethylacrylamid, N-Hydroyxethylmethacrylamid, 5-Hydroxy-3-oxa-pentyl(meth)acrylamid, N-Hydroxyalkylcrotonamide wie N-Hydroxymethylrotonamid oder N-Hydroxyalkylmaleinimide wie N-Hydroxyethylmaleinimid.

In einer Ausführungsform werden Verbindungen der nachfolgenden Formel als Komponenten A4 eingesetzt

$$RG\text{-}R^1\text{-}O\text{-}C(=O)\text{-}CHR^2\text{=}CHR^3,$$

wobei

- RG die oben angegebene Bedeutung hat und insbesondere für die OH-Gruppe steht,
- $R^1$ die oben angegebene Bedeutung hat und insbesondere für 1,2-Ethylen, 1,2-Propylen, 1,3-Propylen, 1,2-Butylen, 1,4-Butylen, 1,3-Butylen und insbesondere bevorzugt für 1,2-Ethylen steht,
- $R^2$ für Wasserstoff, $C_1$-$C_4$-Alkyl, -C(=O)-O-$C_1$-$C_4$-Alkyl, -$CH_2$-C(=O)-O-$C_1$-$C_4$-Alkyl, bevorzugt für Wasserstoff und Methyl und insbesondere bevorzugt für Wasserstoff steht, und
- $R^3$ für Wasserstoff, $C_1$-$C_4$-Alkyl, -C(=O)-O-$C_1$-$C_4$-Alkyl oder -C≡N und bevorzugt für Wasserstoff steht.

In einer bevorzugten Ausführungsform ist die Komponente A4 ausgewählt aus der Gruppe bestehend aus 2-Hydroxyethylacrylat, 2-Hydroxyethylmethacrylat, 2- oder 3-Hydroxypropylacrylat, 1,4-Butandiolmonoacrylat, 1,2- oder 1,3-Diacrylat von Glyzerin, Trimethylolpropandiacrylat, Pentaerythrittriacrylat, Ditrimethylolpropantriacrylat und Dipentaerythritpentaacrylat, bevorzugt aus 2-Hydroxyethylacrylat und 2-Hydroxyethylmethacrylat und besonders bevorzugt handelt es sich um 2-Hydroxyethylacrylat.

In einer weiteren bevorzugten Ausführungsform handelt es sich bei der Komponente A4 um ein Epoxy(meth)acrylat mit mindestens zwei, beispielsweise zwei bis vier, bevorzugt zwei bis drei und besonders bevorzugt genau zwei Hydroxygruppen und ebenso vielen (Meth)acrylatgruppen. Dabei soll im Rahmen dieser Schrift unter einer (Meth)acrylatgruppe eine Methacrylat- [-O-C(=O)-C($CH_3$)=$CH_2$] und/oder Acylatgruppe [-O-C(=O)-CH=$CH_2$] verstanden werden.

Vorteilhaft sind Epoxy(meth)acrylate durch Umsetzung einer Epoxidverbindung mit Acrylsäure und/oder Methacrylsäure unter Ausbildung einer $\beta$-Hydroxyalkyl(meth)acrylatgruppe zugänglich.

Bevorzugt handelt es sich bei Epoxy(meth)acrylaten um Umsetzungprodukte von Glycidylethern mit (Meth)acrylsäure.

In Betracht kommen dabei insbesondere die Glycidylether aliphatischer oder aromatische Polyole. Derartige Produkte werden im Handel in großer Zahl angeboten. Besonders bevorzugt sind Polyglycidylverbindungen vom Bisphenol A-, -F- oder -B-Typ, deren vollständig hydrierte Derivate und Glycidylether mehrwertiger Alkohole, wie beispielsweise des Butan-1,4-diols, 1,4-(Dimethylol)cyclohexans, Neopentylglykols, Hexan-1,6-diols, Glyzerins, Trimethylolpropans oder Pentaerythrits. Beispiele für Polyepoxidhandelsprodukte sind Epikote® 812 (Epoxidwert: ca. 0,67 mol/100 g) und Epikote® 828 (Epoxidwert: ca. 0,53 mol/100 g), Epikote® 1001, Epikote® 1007 und Epikote® 162 (Epoxidwert: ca. 0,61 mol/100 g) der Firma Resolution Performance Products oder Rütapox® 0162 (Epoxidwert: ca. 0,58 mol/100 g), Araldit® DY 0397 (Epoxidwert: ca. 0,83 mol/100 g) der Firma Vantico AG.

Besonders bevorzugt sind Bisphenol-A-diglycidylether und 1,4-Butandioldiglycidylether, wobei Bisphenol-A-diglycidylether ganz besonders bevorzugt ist.

In einer weiteren bevorzugten Ausführungsform handelt es sich bei der Komponente A4 um ein Epoxy(meth)acrylat der Formel

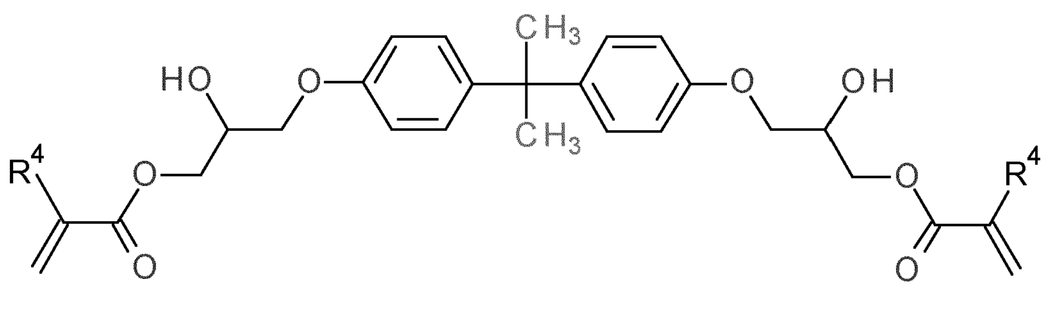

worin

- $R^4$ für Wasserstoff oder Methyl und bevorzugt für Wasserstoff steht.

Generell gilt für die Komponente A4, dass sie vorteilhaft als wenigstens eine gegenüber einer Isocyanatgruppe

reaktive Gruppe wenigstens eine Hydroxygruppe und als wenigstens eine gegebenenfalls substituierte Acryloyloxygruppe wenigstens eine unsubstituierte Acryloyloxygruppe aufweist.

Bei der Herstellstellung des Polyurethans A kann als optionale Reaktionskomponente (Komponente A5) wenigstens eine organische Verbindung mit lediglich einer gegenüber einer Isocyanatgruppe reaktiven Gruppe, eingesetzt werden, welche sich von den Komponenten A3 und A4 unterscheidet.

Als optionale Komponenten A5 einsetzbar sind insbesondere Verbindungen der allgemeinen Formel

$$RG\text{-}R^5$$

wobei

RG die oben angegebene Bedeutung hat und insbesondere für die OH-Gruppe steht, und

$R^5$ für einen einwertigen $C_1$-$C_{18}$-Alkylrest, $C_6$-$C_{12}$-Arylrest, $C_5$-$C_{12}$-Cycloalkylrest oder einen fünf bis sechsgliedrigen, wenigstens ein Sauerstoff-, Stickstoff- und/oder Schwefelatom aufweisenden Heterocyclusrest steht, wobei dieser Rest noch funktionelle Gruppen, wie $C_1$-$C_{18}$-Alkyl-, $C_6$-$C_{12}$-Aryl-, $C_5$-$C_{12}$-Cycloalkyl-, Halogen- oder eine fünf bis sechsgliedrige, wenigstens ein Sauerstoff-, Stickstoff- und/oder Schwefelatom aufweisende Heterocyclusgruppen aufweisen kann, welche selbst nicht in der Lage sind mit einer Isocyanatgruppe zu reagieren.

Beispielsweise geeigneter Komponenten A5 sind, Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, Cyclopentanol, die isomeren Methylcyclohexanole oder Hydroxymethylcyclohexan, 3-Ethyl-3-hydroxymethyloxetan, oder Tetrahydrofurfurylalkohol; aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Di-n-butylamin, Diisobutylamin, Bis-(2-ethyl-hexyl)-amin, N-Methyl- und N-Ethylcyclohexylamin oder Dicyclohexylamin, heterocylische sekundäre Amine wie Morpholin, Pyrrolidin, Piperidin oder 1H-Pyrazol sowie spezifische tert-Aminoalkohole wie 2-(Dimethylamino)ethanol, 2-(Diethylamino)ethanol, 2-Di(isopropylamino)ethanol, 2-(Di-n-butylamino)ethanol, 3-(Dimethylamino)propanol oder 2-(Dimethylamino)propanol.

Mit Vorteil wird als optionale Komponente A5 wenigstens ein aliphatischer $C_1$- bis $C_6$-Alkohol, wie beispielsweise Methanol, Ethanol, n-Propanol, Isopropanol, n-Butanol, Isobutanol, sec-Butanol, die isomeren Pentanole sowie die isomeren Hexanole und/oder ein primäres oder sekundäres aliphatisches Amin, wie beispielsweise Methylamin, Ethylamin, n-Proplyamin, n-Butylamin, Dimethylamin, Diethylamin, Di-n-proplyamin oder Diisopropylamin, eingesetzt, wobei ein aliphatischer $C_1$- bis $C_6$-Alkohol bevorzugt und Methanol, n-Propanol und/oder n-Pentanol besonders bevorzugt sind.

Von Bedeutung in diesem Zusammenhang ist, dass die vorgenannten optionalen Komponenten A5 im Wesentlichen zur Herabsetzung der Zahl reaktiver freier Isocyanatgruppen bzw. zur Modifizierung der Eigenschaften des Polyurethans A eingesetzt werden.

Als weitere optionale Komponente bei der Herstellung des Polyurethans A kann wenigstens eine organische Verbindung mit wenigstens zwei gegenüber einer Isocyanatgruppe reaktiven Gruppen, welche sich von den Komponenten A2 bis A4 unterscheidet, eingesetzt werden (Komponente A6). Dabei kommen als gegenüber einer Isocyanatgruppe reaktiven Gruppe insbesondere die HS-, $H_2N$- oder $R^2HN$-Gruppen in Betracht, worin $R^2$ die oben für $R^1$ angegebene Bedeutung hat.

Dabei kann die wenigstens eine organische Komponente A6 sowohl aliphatischer oder aromatischer Struktur sein, wobei die aliphatischen oder aromatischen Strukturelemente auch Heteroatome wie Sauerstoff, Schwefel oder Stickstoff enthalten können.

Vorteilhaft werden als wenigstens eine Komponente A6 solche aliphatischen Verbindungen eingesetzt, welche wenigstens eine primäre und/oder wenigstens eine sekundäre Aminogruppe aufweisen.

Beispiele für Komponenten A6 mit zwei primären Aminogruppen, sind $C_1$-$C_{20}$-Alkylendiamine, wie Ethylen-1,2-diamin, Butylen-1,4-diamin, Pentan-1,5-diamin, Neopentyldiamin und Hexamethylendiamin sowie 4,9-Dioxadodecan-1,12-diamin, 4,7,10-Trioxatridecan-1,13-diamin, 4,4'-Diaminodicyclohexylmethan und Isophorondiamin sowie aminterminierte Polyalklylendiole auf Basis der Homo und/oder Copolymerisate von Ethylenglykol und/oder Proplyenglykol, mit Molekulargewichten im Bereich von 200 bis 4000 g/mol.

Beispiele für Komponenten A6 mit wenigstens einer primären und wenigstens einer sekundären Aminogruppen sind insbesondere 3-Amino-1-methylaminopropan, Diethylentriamin, Triethylentetramin, Dipropylentriamin oder N,N'-Bis(3-aminopropyl)ethylendiamin.

Wird zur Herstellung des Polyurethans A wenigstens eine optionale Komponente A6 eingesetzt, so finden insbesondere Isophorondiamin und/oder Diethylentriamin Verwendung.

Von Bedeutung in diesem Zusammenhang ist, dass die Komponenten A6 zum Molmassenaufbau des Polyurethans A eingesetzt wird, wodurch sich insbesondere die Klebrigkeit der erhaltenen Beschichtungen verringert und

deren Härte zunimmt.

Erfindungsgemäß vorteilhaft werden die Komponenten A1 bis A6 in Art und Menge so gewählt, dass das Verhältnis der Summe der äquivalenten Mengen der gegenüber einer Isocyanatgruppe reaktiven Gruppen der Komponenten A2 bis A6 zu der äquivalenten Menge der Isocyanatgruppen der Komponente A1 im Bereich ≥ 0,8 und ≤ 1,2 und bevorzugt im Bereich ≥ 0,9 und ≤ 1,1 liegt.

Erfindungsgemäß vorteilhaft wird das Polyurethan A erhalten durch Umsetzung von

| | |
|---|---|
| ≥ 10 und ≤ 55 Gew.-% | wenigstens einer Komponente A1, |
| ≥ 15 und ≤ 85 Gew.-% | wenigstens einer Komponente A2, |
| ≥ 2 und ≤ 15 Gew.-% | wenigstens einer Komponente A3, |
| > 0 und ≤ 40 Gew.-% | wenigstens einer Komponente A4, |
| ≥ 0 und ≤ 15 Gew.-% | wenigstens einer Komponente A5, und |
| ≥ 0 und ≤ 5 Gew.-% | wenigstens einer Komponente A6, |

wobei sich die Gesamtmengen der Komponenten A1 bis A6 auf 100 Gew.-% aufsummieren.

Mit Vorteil wird das Polyurethan A für harte Filme erhalten durch Umsetzung von

| | |
|---|---|
| ≥ 20 und ≤ 50 Gew.-% | wenigstens einer Komponente A1, |
| ≥ 25 und ≤ 60 Gew.-% | wenigstens einer Komponente A2, |
| ≥ 2 und ≤ 15 Gew.-% | wenigstens einer Komponente A3, |
| ≥ 4 und ≤ 35 Gew.-% | wenigstens einer Komponente A4, |
| ≥ 0 und ≤ 10 Gew.-% | wenigstens einer Komponente A5, und |
| ≥ 0 und ≤ 5 Gew.-% | wenigstens einer Komponente A6, |

wobei sich die Gesamtmengen der Komponenten A1 bis A6 auf 100 Gew.-% aufsummieren.

Mit besonderem Vorteil wird das Polyurethan A für harte Filme erhalten durch Umsetzung von

| | |
|---|---|
| ≥ 20 und ≤ 50 Gew.-% | Isophorondiisocyanat, Hexamethylendiisocyanat, Dicyclohexylmethan-4,4'-diisocyanat, Isocyanurat auf Basis von Hexamethylendiisocyanat und/oder Isocyanurat auf Basis von Isophorondiisocyanat, |
| ≥ 30 und ≤ 55 Gew.-% | Butan-1,4-diol, Polyesterol auf Basis von Hexan-1 ,6-diol, Adipinsäure und Isophthalsäure mit einem Molekulargewicht im Bereich ≥ 1000 und ≤ 2000 g/mol und/oder Polypropylenglykol mit einem Molekulargewicht im Bereich ≥ 1500 und ≤ 2500 g/mol, |
| ≥ 2 und ≤ 10 Gew.-% | 2,2-(Dimethylol)propionsäure, (2-Aminoethyl)-3-aminopropansäure und/oder Polyethylenglykolmonomethylether mit einem Molekulargewicht im Bereich ≥ 750 und ≤ 1250 g/mol, |
| ≥ 5 und ≤ 30 Gew.-% | 2-Hydroxyethylacrylat, Butan-1,4-dioldiglycidyletherdiacrylat und/oder Bisphenol-A-diglycidyletherdiacrylat, |
| ≥ 0 und ≤ 5 Gew.-% | Methanol, n-Propanol und/oder n-Pentanol (Komponente A5), und |
| ≥ 0 und ≤ 3 Gew.-% | Isophorondiamin, Diethylentriamin und/oder Hexamethylendiamin, |

wobei sich die Gesamtmengen der Komponenten A1 bis A6 auf 100 Gew.-% aufsummieren.

Mit Vorteil wird das Polyurethan A für weiche Filme erhalten durch Umsetzung von

| | |
|---|---|
| ≥ 10 und ≤ 40 Gew.-% | wenigstens einer Komponente A1, |
| ≥ 35 und ≤ 85 Gew.-% | wenigstens einer Komponente A2, |
| ≥ 2 und ≤ 15 Gew.-% | wenigstens einer Komponente A3, |
| ≥ 0,1 und ≤ 20 Gew.-% | wenigstens einer Komponente A4, |
| ≥ 0 und ≤ 15 Gew.-% | wenigstens einer Komponente A5, und |
| ≥ 0 und ≤ 1 Gew.-% | wenigstens einer Komponente A6, |

wobei sich die Gesamtmengen der Komponenten A1 bis A6 auf 100 Gew.-% aufsummieren.

Mit besonderem Vorteil wird das Polyurethan A für weiche Filme erhalten durch Umsetzung von

| | |
|---|---|
| $\geq$ 10 und $\leq$ 40 Gew.-% | Isophorondiisocyanat, Hexamethylendiisocyanat und/oder Toluendiisocyanat, |
| $\geq$ 40 und $\leq$ 85 Gew.-% | Polypropylenglykol mit einem Molekulargewicht im Bereich $\geq$ 1000 und $\leq$ 4000 g/mol, Polyesterol auf Basis von Hexan-1,6-diol, Adipinsäure und Sebacinsäure mit einem Molekulargewicht im Bereich $\geq$ 1000 und $\leq$ 4000 g/mol und/oder Polyethylen/propylenglykol mit einem Molekulargewicht im Bereich $\geq$ 1000 und $\leq$ 4000 g/mol, |
| $\geq$ 2 und $\leq$ 15 Gew.-% | 2,2-(Dimethylol)propionsäure und/oder Polyethylenglykolmonomethylether mit einem Molekulargewicht im Bereich $\geq$ 500 und $\leq$ 1250 g/mol, |
| $\geq$ 0,1 und $\leq$ 20 Gew.-% | 2-Hydroxyethylacrylat, 2-Hydroxyethylmethacrylat und/oder Butan-1,4-dioldiglycidyletherdiacrylat, |
| $\geq$ 0 und $\leq$ 10 Gew.-% | Methanol, Ethanol, n-Propanol und/oder n-Pentanol, und |
| $\geq$ 0 und $\leq$ 0,5 Gew.-% | Hexamethylendiamin, 2-Aminoethanol und/oder aminterminierte Polyproplylenglykole mit einem Molekulargewicht im Bereich $\geq$ 240 und $\leq$ 1000 g/mol |

wobei sich die Gesamtmengen der Komponenten A1 bis A6 auf 100 Gew.-% aufsummieren.

Die Bestimmung der vorgenannten Molekulargewichte erfolgte generell mittels der dem Fachmann geläufigen Gelpermeationschromatographie mit geeichten Standards.

Die Herstellung des Polyurethans A erfolgt in der Regel dergestalt, dass die Komponenten A1 bis A5 bei einer Reaktionstemperatur $\geq$ 25 und $\leq$ 100 °C und vorteilhaft $\geq$ 40 und $\leq$ 90 °C über einen Zeitraum von $\geq$ 3 und $\leq$ 20 Stunden und vorteilhaft $\geq$ 5 und $\leq$ 12 Stunden miteinander in Ab-, bevorzugt jedoch in Anwesenheit eines Katalysators zur Reaktion gebracht werden, wobei wenigstens eine Teilmenge, vorteilhaft die Gesamtmengen der wenigstens einen Komponente A1 bis A5 gemeinsam mit dem Katalysator in einem Reaktor vorgelegt und bei der angegebenen Temperatur miteinander umgesetzt werden. Soll dabei die optionale Komponente A6 zum Molekulargewichtsaufbau eingesetzt werden, so wird diese bevorzugt zugegeben, wenn das Reaktionsgemisch einen vorgegebenen Rest-NCO-Gehalt, beispielsweise 0,1 bis 2 Gew.-% erreicht hat. Das daran erhaltene Reaktionsprodukt wird vorteilhaft mit einem tertiären Amin oder einer wässrigen Alkalihydroxid-Lösung neutralisiert. Die Menge des verwendeten Neutralisationsmittels hängt von der eingesetzten Menge der Säurekomponente A3 ab. Üblicherweise werden 40 bis 100 Mol-% der eingesetzten Säuregruppen neutralisiert. In einer optionalen Ausführungsform wird dem Reaktionsgemisch daran anschließend eine weitere Komponente A6 zugesetzt. Anschließend lässt man das Reaktionsgemisch noch mindestens 15 Minuten, bevorzugt 30 Minuten und insbesondere bevorzugt 45 Minuten bei vorgegebener Reaktionstemperatur nachreagieren.

Die Umsetzung der Komponenten A1 bis A6 erfolgt vorteilhaft in Anwesenheit eines geeigneten Katalysators. Solche Katalysatoren sind literaturbekannt, beispielsweise aus G. Oertel (Hrsg.), Polyurethane, 3. Auflage 1993, Carl Hanser Verlag, München - Wien, Seiten 104 bis 110, Kapitel 3.4.1. "Katalysatoren", bevorzugt sind organische Amine, insbesondere tertiäre aliphatische, cycloaliphatische oder aromatische Amine, Brønsted-Säuren und/oder Lewis-saure Organometallverbindungen, besonders bevorzugt sind Lewis-saure Organometallverbindungen. Bevorzugt handelt es sich dabei um Lewis-saure organische Metallverbindungen, für die z.B. Zinnverbindungen in Frage kommen, wie beispielsweise Zinn-(II)-salze von organischen Carbonsäuren, z.B. Zinn-(II)-diacetat, Zinn-(II)-dioctoat, Zinn-(II)-bis(ethylhexanoat) und Zinn-(II)-dilaurat und die Dialkylzinn-(IV)-salze von organischen Carbonsäuren, z.B. Dimethylzinn-diacetat, Dibutylzinn-diacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinn-diacetat. Zudem können Zink-(II)-Salze eingesetzt werden, wie beispielsweise Zink-(II)-dioctoat.

Auch Metallkomplexe, wie die Acetylacetonate des Eisens, Titans, Aluminiums, Zirkons, Mangans, Nickels, Zinks und Cobalts können als Katalysatoren eingesetzt werden.

Weitere Metallkatalysatoren werden von Blank et al. in Progress in Organic Coatings, 1999, Vol. 35, Seiten 19 bis 29 beschrieben.

Als Zinn- und Zink-freie Alternativen werden u.a. Zirkonium-, Bismut-, Titan- und AluminiumVerbindungen eingesetzt. Dies sind beispielsweise Zirkoniumtetraacetylacetonat (z.B. K-KAT® 4205 der Firma King Industries); Zirkoniumdionate (z.B. K-KAT® XC-9213; XC-A 209 und XC-6212 der Firma King Industries); Aluminiumdionat (z.B. K-KAT® 5218 der Firma King Industries).

Als geeignete Zink- und Bismutverbindungen kommen dabei solche in Betracht, in denen folgende Anionen eingesetzt werden: $F^-$, $Cl^-$, $ClO^-$, $ClO_3^-$, $ClO_4^-$, Br, $J^-$, $JO_3^-$, $CN^-$, $OCN^-$, $NO_2^-$, $NO_3^-$, $HCO_3^-$, $CO_3^{2-}$, $S^{2-}$, $SH^-$, $HSO_3^-$, $SO_3^{2-}$, $HSO_4^-$, $SO_4^{2-}$, $S_2O_2^{2-}$, $S_2O_4^{2-}$, $S_2O_5^{2-}$, $S_2O_6^{2-}$, $S_2O_7^{2-}$, $S_2O_8^{2-}$, $H_2PO_2^-$, $H_2PO_4^-$, $HPO_4^{2-}$, $PO_4^{3-}$, $P_2O_7^{4-}$, $(OC_nH_{2n+1})^-$, $(C_nH_{2n-1}O_2)^-$, $(C_nH_{2n-3}O_2)^-$ sowie $(C_{n+1}H_{2n-2}O_4)^{2-}$, wobei n für die Zahlen 1 bis 20 steht. Bevorzugt sind dabei die Carboxylate, bei denen das Anion den Formeln $(C_nH_{2n-1}O_2)^-$ sowie $(C_{n+1}H_{2n-2}O_4)^{2-}$ mit n gleich 1 bis 20, entspricht.

Besonders bevorzugte Salze weisen als Anionen Monocarboxylate der allgemeinen Formel $(C_nH_{2n-1}O_2)^-$ auf, wobei n für die Zahlen 1 bis 20 steht. Hierbei sind insbesondere zu erwähnen Format, Acetat, Propionat, Hexanoat, Neodekanoat und 2-Ethylhexanoat.

Unter den Zink-Katalysatoren sind die Zink-carboxylate bevorzugt, besonders bevorzugt solche von Carboxylaten, die mindestens sechs Kohlenstoffatome, ganz besonders bevorzugt mindestens acht Kohlenstoffatome aufweisen, insbesondere Zink-(II)-diacetat oder Zink-(II)-dioctoat oder Zink-(II) neodecanoat. Handelsübliche Katalysatoren sind beispielsweise Borchi® Kat 22 von OMG Borchers GmbH, Langenfeld, Deutschland.

Unter den Bismut-Katalysatoren sind die Bismut-carboxylate bevorzugt, besonders bevorzugt solche von Carboxylaten, die mindestens sechs Kohlenstoffatome aufweisen, insbesondere Bismut-octoate, -ethylhexanoate, -neodecanoate, oder -pivalate; beispielsweise K-KAT 348, XC-B221; XC-C227, XC 8203 und XK-601 von King Industries, TIB KAT 716, 716LA, 716XLA, 718, 720, 789 von TIB Chemicals und solchen von Shepherd Lausanne, sowie beispielsweise Borchi® Kat 24; 315; 320 von OMG Borchers GmbH, Langenfeld, Deutschland.

Es kann sich dabei auch um Gemische verschiedener Metalle handeln, wie beispielsweise in Borchi® Kat 0245 von OMG Borchers GmbH, Langenfeld, Deutschland

Unter den Titanverbindungen sind die Titan-tetra-alkoholate $Ti(OR)_4$ bevorzugt, besonders bevorzugt solche von Alkoholen ROH mit 1 bis 8 Kohlenstoffatomen, beispielsweise Methanol, Ethanol, iso-Propanol, n-Propanol, n-Butanol, iso-Butanol, sek-Butanol, tert-Butanol, n-Hexanol, n-Heptanol, n-Octanol, bevorzugt sind Methanol, Ethanol, iso-Propanol, n-Propanol, n-Butanol, tert-Butanol, besonders bevorzugt sind iso-Propanol und n-Butanol.

Diese Katalysatoren sind für lösungsmittel-, wasserbasierte und/oder blockierte Systeme geeignet.

Bevorzugte Lewissaure organische Metallverbindungen sind Dimethylzinndiacetat, Dibutylzinn-dibutyrat, Dibutylzinn-bis(2-ethylhexanoat), Dibutylzinndilaurat, Dioctylzinn-ilaurat, Zink-(II)-dioctoat, Zirkonacetylacetonat, Zirkon-2,2,6,6-tetramethyl-3,5-heptandionat sowie Bismut-2-ethylhexanoat.

Besonders bevorzugt sind jedoch Zinkdeodecanoat, Bismutneodecanoat und Bismut-2-ethylhexanoat, ganz besonders bevorzugt sind Bismutneodecanoat und Bismut-2-ethylhexanoat.

Es ist auch möglich, die Umsetzung der Komponenten A1 bis A6 ohne Katalysator durchzuführen. In diesem Fall muss das Reaktionsgemisch jedoch höheren Temperaturen und/oder längeren Reaktionszeiten ausgesetzt werden.

Um eine unerwünschte Polymerisierung der (Meth)acrylatgruppen während der Reaktion zu vermeiden, können in kleinen, dem Fachmann geläufigen Mengen, Polymerisationsinhibitoren zugesetzt werden. Derartige Inhibitoren sind beispielsweise beschrieben in WO 03/035596, Seite 5, Zeile 35 bis Seite 10, Zeile 4, worauf hiermit im Rahmen der vorliegenden Offenbarung Bezug genommen sei.

Es kann eine bevorzugte Ausführungsform der vorliegenden Erfindung darstellen, einbaubare Polymerisationsinhibitoren, d.h. solche, die eine HO- oder $H_2N$-Gruppe, d.h. eine gegenüber Isocyanat reaktive Gruppe, enthalten, einzusetzen. Ein bevorzugtes Beispiel dafür ist 4-Hydroxy-2,2,6,6-tetramethyl-piperidin-N-oxyl.

Die Herstellung des Polyurethans A kann unter Reaktionsbedingungen durch Umsetzung der Komponenten A1 bis A6 in Substanz oder vorteilhaft in Anwesenheit eines dem Fachmann geläufigen inerten organischen Lösungsmittels erfolgen. Als inerte organische Lösungsmittel kommen insbesondere solche organischen Lösungsmittel zum Einsatz, in welchen die eingesetzten Mengen der Komponenten A1 bis A5 sowie das erhaltene Polyurethan A bei gegebener Reaktionstemperatur zumindest teilweise löslich sind und welche nicht mit den Komponenten A1 bis A6 sowie dem erhaltene Polyurethan A bei Reaktionstemperatur eine Reaktion eingehen. Beispiele für solche eingesetzten organischen Lösungsmittel sind polare, aprotische organische Lösungsmittel, mit einem Siedepunkt im Bereich $\geq 55$ und $\leq 150$ °C und vorteilhaft im Bereich $\geq 60$ und $\leq 140$ °C, bei Atmosphärendruck (1,013 bar absolut), wie insbesondere Ketone, wie Aceton oder Methylethylketon, Alkansäurenalkyleseter, wie Butylacetat oder Ethylacetat sowie Pyrrolidone, wie N-Methylpyrrolidon oder N-Ethylpyrrolidon.

Dabei wird die Menge an organischem Lösungsmittel so gewählt, dass sie $\geq 5$ und $\leq 50$ Gew.-% und vorteilhaft $\geq 10$ und $\leq 40$ Gew.-%, jeweils bezogen auf die Summe der Gesamtmengen an Komponenten A1 bis A6 (entsprechend 100 Gew.-%) beträgt.

Erfolgt die Herstellung des Polyurethans A durch Umsetzung der Komponenten A1 bis A6 in einem organischen Lösungsmittel, so wird das nach der Umsetzung erhaltene Reaktionsgemisch vorteilhaft unter homogener Mischung mit Wasser versetzt und das organische Lösungsmittel durch Destillation abgetrennt, wobei eine Dispersion des Polyurethans A in Wasser gebildet wird.

Meist wird dabei ein Festkörpergehalt an Polyurethan A von 35 bis 45 Gew-% eingestellt, dieser kann aber auch bis zu 60 Gew.-% betragen.

Die mittlere Teilchengröße des dispergierten Polyurethans A, beträgt dabei in der Regel 10 bis 250 nm, bevorzugt 15 bis 200 nm, besonders bevorzugt 20 bis 150 nm, ganz besonders bevorzugt 30 bis 120 nm. Dabei erfolgt im Rahmen dieser Schrift die mittleren Teilchendurchmesser nach der Methode der quasielastischen Lichtstreuung (ISO-Norm 13 321; cumulant z-average) bestimmt. Von Bedeutung ist jedoch, dass das dispergierte Polyurethan A erfindungsgemäß auch in multimodaler Teilchengrößenverteilung vorliegen kann.

In einer bevorzugten Ausführungsform werden Polyurethane A eingesetzt, welche eine Doppelbindungsdichte

im Bereich von ≥ 0,01 und ≤ 2,5 und vorteilhaft im Bereich von ≥ 0,1 und ≤ 2,0 mol gegebenenfalls substituierte Acryloyloxygruppen pro kg Polyurethan A aufweisen.

Die erfindungsgemäße wässrige Bindemittelformulierung enthält neben wenigstens einem Polyurethan A, insbesondere in Form einer wässrigen Polyurethan A-Dispersion noch ein Carbonsäurehydrazid B.

Erfindungsgemäß zum Einsatz kommen als Carbonsäurehydrazide B sowohl Monocarbonsäurehydrazide sowie vorteilhaft auch Dicarbonsäuredihydrazide, welche sich von aliphatischen, aromatischen und heterocyclischen Mono- und Dicarbonsäuren ableiten. Dabei erfolgt die Herstellung der Monocarbonsäure- und der Dicarbonsäuredihydrazide vorteilhaft durch Umsetzung der entsprechenden Monocarbonsäure- und der Dicarbonsäuredialkylester bzw. Monocarbonsäure- und der Dicarbonsäuredihalogenide, insbesondere der entsprechenden Monocarbonsäurechloride und der Dicarbonsäuredichloride, mit Hydrazin.

Erfindungsgemäß einsetzbare Monocarbonsäurehydrazide B sind vorteilhaft Verbindungen nachfolgender Formel

$$R^5\text{-C(=O)-NH-NH}_2,$$

wobei

$R^5$ die oben angegebene Bedeutung hat und insbesondere für einen aliphatischen oder aromatischen Rest steht.

Beispiele für aliphatische Monocarbonsäurehydrazide B sind die alicyclischen Verbindungen Formylhydrazid [HC(=O)-NH-$HN_2$], Acetylhydrazid [$H_3C$-C(=O)-NH-$HN_2$] , Propionylhydrazid [$H_3C$-$CH_2$-C(=O)-NH-$HN_2$], Butionylhydrazid [$H_3C$-$(CH_2)_2$-C(=O)-NH-$HN_2$], Capryoylhydrazid [$H_3C$-$(CH_2)_3$-C(=O)-NH-$HN_2$], die cycloaliphatischen Verbindungen Cyclopentylcarbonsäurehydrazid oder Cyclohexylcarbonsäurehydrazid, sowie Amidooxalsäurehydrazid [$H_2N$-C(=O)-(C=O)-NH-$NH_2$] die aromatischen Verbindungen Benzoesäurehydrazid, 2-Chlorbenzoesäurehydrazid, 2-Nitrobenzoesäurehydrazid, 3-Brombenzoesäurehydrazid, 4-Chlorbenzoesäurehydrazid, 4-Nitrobenzoesäurehydrazid, 4-Brombenzoesäurehydrazid, 4-Aminobenzoesäurehydrazid, 4-Hydroxybenzoesäurehydrazid, 4-Methylbenzoesäurehydrazid, Phenylessigsäurehydrazid, Salicylsäurehydrazid, L-Tyrosinhydrazid, 3-Hydroxynaphthyloylhydrazid oder 1-Acetyl-2-phenylhydrazin.

Bevorzugte Monocarbonsäurehydrazide B sind Acetylhydrazid und/oder Benzoylhydrazid, wobei Acetylhydrazid besonders bevorzugt ist.

Erfindungsgemäß einsetzbare Dicarbonsäuredihydrazide B sind vorteilhaft Verbindungen nachfolgender Formel

$$H_2N\text{-NH-C(=O)-}R^1\text{-C(=O)-NH-NH}_2,$$

wobei

$R^1$ die oben angegebene Bedeutung hat und insbesondere für Methylen, 1,2-Ethylen, 1,4-Butylen oder 1,2-, 1,3 bzw. 1,4-Phenylen steht.

Beispiele für aliphatische Dicarbonsäuredihydrazide B sind die alicyclischen Verbindungen Oxalsäuredihydrazid, Malonsäuredihydrazid, Bernsteinsäuredihydrazid, Glutarsäuredihydrazid, Adipinsäuredihydrazid. Beispiele für aromatische Dicarbonsäuredihydrazide sind Phthalsäuredihydrazid, Isophthalsäuredihydrazid oder Terephthalsäuredihydrazid.

Von Bedeutung ist, dass erfindungsgemäß auch das Dihydrazid der Kohlensäure, das Carbodihydrazid [$H_2N$-NH-C(=O)-NH-$NH_2$] als Dihydrazidverbindung eingesetzt werden kann.

Bevorzugte Dicarbonsäuredihydrazide B sind die Dihydrazide aliphatischer Dicarbonsäuren, wobei das Malonsäuredihydrazid und/oder Adipinsäuredihydrazid besonders bevorzugt sind.

Erfindungsgemäß vorteilhaft werden Carbonsäurehydrazide B eingesetzt, welche eine Löslichkeit von ≥ 5 g/l, bevorzugt ≥ 10 und besonders bevorzugt ≥ 100 g/l entionisiertem Wasser bei 20 °C und 1,013 bar (absolut) aufweisen. Optional können zur Erhöhung der Löslichkeit der Carbonsäurehydrazide B in Mengen ≤ 10 Gew.-%, bevorzugt ≤ 5 Gew.-%, bezogen auf die wässrige Bindemittelformulierung, zusätzlich aliphatische Alkohole, wie insbesondere Methanol, Ethanol und/oder Isopropanol, eingesetzt werden.

In den erfindungsgemäßen wässrigen Bindemittelformulierungen werden die Art und Mengen des Polyurethans A und des Carbonsäurehydrazids B so gewählt werden, dass das äquivalente Verhältnis der gegebenenfalls substituierten Acryloyloxygruppen aus Komponente A4 zu den Hydrazidgruppen in der Regel im Bereich ≥ 0,1 und ≤ 100, im Falle eines Monocarbonsäurehydrazids B vorteilhaft im Bereich ≥ 1 und ≤ 99, insbesondere vorteilhaft im Bereich ≥ 1,5 und ≤ 9 und besonders vorteilhaft im Bereich ≥ 2 und ≤ 8 und im Fall eines Dicarbonsäuredihydrazids vorteilhaft im

Bereich ≥ 1,5 und ≤ 99, insbesondere vorteilhaft im Bereich ≥ 2 und ≤ 50 und besonders vorteilhaft im Bereich ≥ 3 und ≤ 9 liegt. Dabei kann die Gesamtmenge an aktivem Bindemittel, gebildet aus den Gesamtmengen an Polyurethan A und Carbonsäurehydrazid B je nach Anwendungszweck ≥ 20 und ≤ 70 Gew.-%, vorteilhaft ≥ 30 und ≤ 65 Gew.-% und besonders vorteilhaft ≥ 35 und ≤ 60 Gew.-%, jeweils bezogen auf die Gesamtmenge der wässrigen Bindemittelformulierung, betragen.

Die erfindungsgemäßen wässrigen Bindemittelformulierungen sind lagerstabil und vermögen sowohl unter Einwirkung wie auch in Abwesenheit energiereicher Strahlung auszuhärten, weswegen sie als Bindemittel bei der Herstellung von Klebstoffen, Dichtmassen, Kunstharzputzen, Papierstreichmassen, Faservliesen, flexiblen Dachbeschichtungen, Druckfarben und Beschichtungsmitteln sowie bei der Sandverfestigung, als Komponente bei der Herstellung von Textil oder Lederhilfsmitteln und Schlagzähmodifier oder zur Modifizierung von mineralischen Bindemitteln und Kunststoffen eingesetzt werden können.

Dabei können die wässrigen Bindemittelformulierungen in einfacher Weise durch Mischen des im wässrigen Medium dispergierten Polyurethans A mit dem Carbonsäurehydrazid B hergestellt werden, wobei die Herstellung vorab oder während der Verwendung der wässrigen Bindemittelformulierungen erfolgen kann. Mit Vorteil erfolgt die Herstellung der wässrigen Bindemittelformulierung vorab deren Verwendung.

Mit Vorteil werden die wässrigen Bindemittelformulierungen als Bindemittel, insbesondere in Anstrichformulierungen, wie pigmenthaltige Anstrichformulierungen oder pigmentfreien Klarlackformulierungen, eingesetzt.

Selbstverständlich können die wässrigen Bindemittelformulierungen im Rahmen der vorliegenden Erfindung je nach Anwendungszweck noch weitere, dem Fachmann in Art und Menge geläufige übliche Hilfsstoffe enthalten, wie beispielsweise, Pigmente, Füllstoffe, Farbstoffe, optische Aufheller, Retentionsmittel, Netzmittel, Filmbildehilfsmittel, Entschäumer, Konservierungsmittel, Biozide, Schleimbekämpfungsmittel, Weichmacher, Antiblockmittel, Antistatika, Puffersubstanzen, Hydrophobierungsmittel etc., wobei jedoch Pigmente und/oder Füllstoffe bei den Anstrichformulierungen bevorzugt sind.

Als Pigmente können prinzipiell alle dem Fachmann geläufigen Weiß- bzw. Buntpigmente eingesetzt werden.

Als wichtigstes Weißpigment ist aufgrund seines hohen Brechungsindex (Rutil: 2,70 und Anatas: 2,55) und seines guten Deckvermögens Titandioxid in seinen verschiedenen Modifikationen zu nennen. Aber auch Zinkoxid und Zinksulfid werden als Weißpigmente eingesetzt. Dabei können diese Weißpigmente in oberflächenbeschichteter (d.h. gecoateter) bzw. unbeschichteter (d.h. nicht gecoateter) Form eingesetzt werden. Daneben werden aber auch organische Weißpigmente, wie beispielsweise nichtverfilmende styrol- und carboxylgruppenreiche hohle Polymerisatteilchen mit einer Teilchengröße von ca. 300 bis 400 nm (sogenannte Opakteilchen) verwendet.

Neben Weißpigmenten können zur Farbgestaltung dem Fachmann geläufige unterschiedlichste Buntpigmente, beispielsweise die etwas preiswerteren anorganischen Eisen-, Cadmium-, Chrom- und Bleioxide bzw. -sulfide, Bleimolybdat, Kobaltblau oder Ruß sowie die etwas teureren organischen Pigmente, beispielsweise Phthalocyanine, Azopigmente, Chinacridone, Perylene oder Carbazole eingesetzt werden.

Als Füllstoffe werden im Wesentlichen anorganische Materialien mit im Vergleich zu den Pigmenten geringerem Brechungsindex verwendet (weiße Füllstoffe weisen nach DIN 55943 und DIN 55945 Brechungsindexwerte < 1,7 auf). Die pulverförmigen Füllstoffe sind dabei häufig natürlich vorkommende Mineralien, wie beispielsweise Calcit, Kreide, Dolomit, Kaolin, Talk, Glimmer, Diatomeenerde, Baryt, Quarz oder Talk/Chlorit-Verwachsungen aber auch synthetisch hergestellte anorganische Verbindungen, wie beispielsweise präzipitiertes Calciumcarbonat, kalziniertes Kaolin oder Bariumsulfat sowie pyrogene Kieselsäure. Bevorzugt wird als Füllstoff Calciumcarbonat in Form des kristallinen Calcits oder der amorphen Kreide eingesetzt.

Enthalten die erfindungsgemäßen wässrigen Bindemittelformulierungen Pigmente und/oder Füllstoffe, so weisen in der Regel eine Pigmentvolumenkonzentration im Bereich ≥ 1 und ≤ 60 %, vorteilhaft ≥ 5 und ≤ 50 % und insbesondere vorteilhaft ≥ 10 und ≤ 40 % auf. Dabei wird unter der Pigmentvolumenkonzentration (PVK) das Volumen der Pigmente und der Füllstoffe multipliziert mit 100, dividiert durch das Volumen des Bindemittelpolymers plus das Volumen der Pigmente und der Füllstoffe verstanden.

$$\%\ \text{PVK} = \frac{\text{Volumen der Pigmente und Füllstoffe}}{\text{Volumen des Bindemittelpolymers + Volumen der Pigmente und Füllstoffe}}$$

Von besonderer Bedeutung ist, dass auch wässrige Bindemittelformulierungen für spezifische Anwendungsgebiete erfindungsgemäß umfasst sein sollen, wie insbesondere
Anstrichformulierung, enthaltend (als Feststoff gerechnet)

| | |
|---|---|
| ≥ 20 und ≤ 80 Gew.-% | Polyurethan A, |
| ≥ 0,1 und ≤ 5 Gew.-% | Carbonsäurehydrazid B, |

(fortgesetzt)

| | |
|---|---|
| ≥ 0 und ≤ 30 Gew.-% | Pigmente, |
| ≥ 0 und ≤ 70 Gew.-% | Füllstoffe, |
| ≥ 0 und ≤ 5 Gew.-% | Dispergierhilfsmittel, |
| ≥ 0 und ≤ 10 Gew.-% | Verdicker, sowie |
| ≥ 0 und ≤ 30 Gew.-% | weitere Hilfsstoffe, wie Puffersubstanzen, Biozide etc., |

oder
Klarlackformulierungen, enthaltend (als Feststoff gerechnet)

| | |
|---|---|
| ≥ 10 und ≤ 99 Gew.-% | Polyurethan A, |
| ≥ 0,1 und ≤ 5 Gew.-% | Carbonsäurehydrazid B, |
| ≥ 0 und ≤ 80 Gew.-% | nicht selbstvernetzende wässrige Polyacrylat-Dispersion, |
| ≥ 0 und ≤ 5 Gew.-% | Mattierungsmittel, |
| ≥ 0 und ≤ 2 Gew.-% | Entschäumer, |
| ≥ 0 und ≤ 10 Gew.-% | Filmbildehilfsmittel (organisches Lösungsmittel, sowie |
| ≥ 0 und ≤ 30 Gew.-% | weitere Hilfsstoffe, wie Puffersubstanzen, Biozide etc., |

jeweils bezogen auf den Feststoffgehalt der genannten Bindemittelformulierung, enthalten.

Vorteilhaft werden die erfindungsgemäßen Bindemittelformulierungen auf ein Substrat aufgebracht, anschließend getrocknet und dabei mit oder ohne Einwirkung von energiereicher Strahlung [Elektronenstrahlung und/oder UV-Strahlung] gehärtet. In entsprechender Weise soll auch das dabei erhaltene beschichtete Substrat erfindungsgemäß mit umfasst sein.

Erfindungsgemäß von Bedeutung ist, dass die Menge an wässriger Bindemittelformulierung so gewählt wird, dass die auf das Substrat aufgebrachte Beschichtung nach der Trocknung eine Schichtdicke ≤ 2 mm, vorteilhaft ≥ 0,01 und ≤ 1,5 mm und insbesondere vorteilhaft ≥ 0,03 und ≤ 0,5 mm aufweist. Selbstverständlich ist es erfindungsgemäß möglich, dass auf ein Substrat nacheinander zwei oder mehrere gleiche oder unterschiedliche Bindemittelformulierungsschichten aufgebracht werden können.

Die Beschichtung der Substrate erfolgt nach üblichen, dem Fachmann bekannten Verfahren, wobei man wenigstens eine Beschichtungsmasse auf das zu beschichtende Substrat in der gewünschten Stärke aufbringt und die flüchtigen Bestandteile der Beschichtungsmassen entfernt. Dieser Vorgang kann - falls gewünscht - ein- oder mehrfach wiederholt werden. Das Aufbringen der wässrigen Beschichtungsformulierung auf das Substrat kann in bekannter Weise, beispielsweise durch Spritzen, Spachteln, Rakeln, Bürsten, Rollen, Walzen oder Gießen erfolgen. Die Beschichtungsstärke, bezogen auf die nichtwässrigen Komponenten der Beschichtungsformulierung, liegt in der Regel in einem Bereich von etwa 3 bis 400 g/m$^2$, vorzugsweise 10 bis 200 g/m$^2$ und besonders bevorzugt 10 bis 80 g/m$^2$.

Gegebenenfalls kann, wenn mehrere Schichten der wässrigen Beschichtungsformulierungen nacheinander übereinander aufgetragen werden, nach jedem Beschichtungs- und Trocknungsvorgang eine Strahlungshärtung und ein Zwischenschliff erfolgen.

Generell erfolgt die Trocknung der Bindemittelformulierung in einer Gasatmosphäre, vorteilhaft in Umgebungsluft, welche eine relative Luftfeuchtigkeit < 100 %, vorteilhaft < 70 % und insbesondere vorteilhaft < 50 % aufweist. Dabei kann die Temperatur im Bereich > 0 und < 100 °C liegen, wobei sie jedoch vorteilhaft im Bereich ≥ 15 und ≤ 80 °C liegt. Dabei ist die Trocknung in der Regel abgeschlossen, wenn die Beschichtung eine Restfeuchte von ≤ 10 Gew.-% und insbesondere bevorzugt ≤ 5 Gew.-% aufweist. Dabei wird die Restfeuchte generell bestimmt, indem ein ca. 1 cm$^2$ großes Stück der Beschichtung ausgestanzt wird, dieses bei Raumtemperatur (20 bis 25 °C) gewogen, dieses daran anschließend für 5 Minuten bei 110 °C im Trockenschrank gelagert und daran anschließend abgekühlt und wieder bei Raumtemperatur gewogen wird. Dabei entspricht die Restfeuchte der Gewichtsdifferenz der Beschichtung vor und nach der Lagerung im Trockenschrank bei 110 °C, bezogen auf das Gewicht der Beschichtung vor der Lagerung im Trockenschrank multipliziert mit dem Faktor 100.

Erfindungsgemäß können alle natürlichen oder synthetischen, organischen oder anorganischen Substrate zur Beschichtung eingesetzt werden, wobei jedoch solche Substrate bevorzugt eingesetzt werden, welche eine hydrophile Oberfläche aufweisen, wie beispielsweise Metall, Glas, Porzellan, Papier, Pappe, Kunststoffe, Beton oder Holz.

Im Rahmen der vorliegenden Schrift weist ein Substrat dann eine hydrophile Oberfläche auf, wenn bei einer Temperatur von 20 °C und Atmosphärendruck der Kontaktwinkel eines auf eine waagrechte ebene Oberfläche eines Substrates aufgebrachter Tropfen entionisierten Wassers, unmittelbar nach dessen Aufbringen, mit der Oberfläche des Substrates einen Kontaktwinkel < 90° ausbildet [Grenzflächenspannung des Substrates zur Umgebung ist größer als

die Grenzflächenspannung des Wassers zur Umgebung].

Sofern die Aushärtung der Bindemittelformulierungen mittels UV-Strahlung erfolgt, ist enthalten diese vorzugsweise wenigstens einen Photoinitiator enthalten, der die Polymerisation ethylenisch ungesättigter Doppelbindungen initiieren kann.

Photoinitiatoren können beispielsweise dem Fachmann bekannte Photoinitiatoren sein, wie beispielsweise die in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen beispielsweise auch Mono- oder Bisacylphosphinoxide, wie sie z.B. in EP-A 7 508, EP-A 57 474, DE-A 196 18 720, EP-A 495 751 oder EP-A 615 980 beschrieben sind, beispielsweise 2,4,6-Trimethylbenzoyldiphenylphosphinoxid (Lucirin® TPO der BASF SE), Ethyl-2,4,6-trimethylbenzoylphenylphosphinat (Lucirin® TPO L der BASF SE), Bis(2,4,6-trimethylbenzoyl)phenylphosphinoxid (Irgacure® 819 der Firma BASF SE), Benzophenone, Hydroxyacetophenone, Phenylglyoxylsäure und ihre Derivate oder Gemische dieser Photoinitiatoren. Als Beispiele seien genannt Benzophenon, Acetophenon, Acetonaphthochinon, Methylethylketon, Valerophenon, Hexanophenon, $\alpha$-Phenylbutyrophenon, p-Morpholinopropiophenon, Dibenzosuberon, 4-Morpholinobenzophenon, 4-Morpholinodeoxybenzoin, p-Diacetylbenzol, 4-Aminobenzophenon, 4'-Methoxyacetophenon, $\beta$-Methylanthrachinon, tert-Butylanthrachinon, Anthrachinoncarbonysäureester, Benzaldehyd, $\alpha$-Tetralon, 9-Acetylphenanthren, 2-Acetylphenanthren, 10-Thioxanthenon, 3-Acetylphenanthren, 3-Acetylindol, 9-Fluorenon, 1-Indanon, 1,3,4-Triacetylbenzol, Thioxanthen-9-on, Xanthen-9-on, 2,4-Dimethyl-thioxanthon, 2,4-Diethylthioxanthon, 2,4-Di-iso-propylthioxanthon, 2,4-Dichlorthioxanthon, Benzoin, Benzoin-iso-butylether, Chloroxanthenon, Benzointetrahydropyranylether, Benzoinmethylether, Benzoinethylether, Benzoinbutylether, Benzoin-iso-propylether, 7-H-Benzoinmethylether, Benz[de]anthracen-7-on, 1-Naphthaldehyd, 4,4'-Bis(dimethylamino)benzophenon, 4-Phenylbenzophenon, 4-Chlorbenzophenon, Michlers Keton, 1-Acetonaphthon, 2-Acetonaphthon, 1-Benzoylcyclohexan-1-ol, 2-Hydroxy-2,2-dimethylacetophenon, 2,2-Dimethoxy-2-phenylacetophenon, 2,2-Di-ethoxy-2-phenylacetophenon, 1,1-Dichloracetophenon, 1-Hydroxyacetophenon, Acetophenondimethylketal, o-Methoxybenzophenon, Triphenylphosphin, Tri-o-Tolylphosphin, Benz[a]anthracen-7,12-dion, 2,2-Diethoxyacetophenon, Benzilketale, wie Benzildimethylketal, 2-Methyl-1-[4-(methylthio)phenyl]-2-morpholinopropan-1-on, Anthrachinone wie 2-Methylanthrachinon, 2-Ethylanthrachinon, 2-tert-Butylanthrachinon, 1-Chlor-anthrachinon, 2-Amylanthrachinon und 2,3-Butandion.

Denkbar als Photoinitiatoren sind ebenfalls polymere Photoinitiatoren, wie beispielsweise der Diester von Carboxymethoxybenzophenon mit Polytetramethylenglykolen unterschiedlichen Molgewichts, bevorzugt 200 bis 250 g/mol (CAS 515136-48-8), sowie CAS 1246194-73-9, CAS 813452-37-8, CAS 71512-90-8, CAS 886463-10-1 oder weitere polymere Benzophenonderivate, wie sie beispielsweise unter dem Handelsnamen Omnipol® BP der Firma Rahn AG, Schweiz im Handel verfügbar sind.

In einer weiteren Ausführungsform können als Photoinitiatoren Silsesquioxanverbindungen mit mindestens einer initiierend wirkenden Gruppe eingesetzt werden, wie in der WO 2010/063612 A1, dort besonders von Seite 2, Zeile 21 bis Seite 43, Zeile 9, beschrieben sind.

Typische Gemische umfassen beispielsweise 2-Hydroxy-2-Methyl-1-phenylpropan-2-on und 1-Hydroxycyclohexylphenylketon, Bis(2,6-dimethoxybenzoyl)-2,4,4-trimethylpentylphosphinoxid und 2-Hydroxy-2-methyl-1-phenylpropan-1-on, Benzophenon und 1-Hydroxycyclohexylphenylketon, Bis(2,6-dimethoxybenzoyl)-2,4,4-trimethylpentylphosphinoxid und 1-Hydroxycyclohexylphenylketon, 2,4,6-Trimethylbenzoyldiphenylphosphinoxid und 2-Hydroxy-2-methyl-1-phenylpropan-1-on, 2,4,6-Trimethylbenzophenon und 4-Methylbenzophenon oder 2,4,6-Trimethylbenzophenon und 4-Methylbenzophenon und 2,4,6-Trimethylbenzoyldiphenylphosphinoxid.

Bevorzugt unter diesen Photoinitiatoren sind 2,4,6-Trimethylbenzoyldiphenylphosphinoxid, Ethyl-2,4,6-trimethylbenzoylphenylphosphinat, Bis(2,4,6-trimethylbenzoyl)phenylphosphinoxid, Benzophenon, 1-Benzoylcyclohexan-1-ol, 2-Hydroxy-2,2-di-methylacetophenon und 2,2-Dimethoxy-2-phenylacetophenon.

Sollen die erfindungsgemäßen Bindemittelformulierungen unter Einwirkung von UV-Strahlung gehärtet werden, so enthalten diese die Photoinitiatoren vorzugsweise in einer Menge von 0,05 bis 10 Gew.-%, besonders bevorzugt 0,1 bis 8 Gew.-%, insbesondere 0,2 bis 5 Gew.-%, jeweils bezogen auf die Gesamtmenge des Polyurethans A.

Die optionale Strahlungshärtung erfolgt durch Einwirkung energiereicher Strahlung, also UV-Strahlung, vorzugsweise Licht der Wellenlänge < 400 nm, vorteilhaft 250 bis 380 nm oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm$^2$. Als UV-Strahlungsquellen bevorzugt sind Quecksilber-Niederdruckstrahler, -Mitteldruckstrahler, -Hochdruckstrahler, die optional mit Gallium oder Eisen dotiert sein können, sowie ferner LED-Strahler.

Die Bestrahlung kann gegebenenfalls auch unter Ausschluss von Sauerstoff unter InertgasAtmosphäre, durchgeführt werden. Als Inertgase eignen sich vorzugsweise Stickstoff, Edelgase, Kohlendioxid oder Verbrennungsgase. Des Weiteren kann die Bestrahlung erfolgen, indem die Bindemittelformulierungen mit transparenten Medien abgedeckt

wird. Transparente Medien sind beispielsweise Kunststofffolien, Glas oder Flüssigkeiten. In einer Ausführungsform erfolgt eine Bestrahlung in der Weise, wie sie in der DE-A 199 57 900 beschrieben ist.

In einem bevorzugten Verfahren erfolgt die Beschichtung der Substrate sowie die nachfolgende Aushärtung kontinuierlich. In einer erfindungsgemäßen Ausführungsform wird das mit der Bindemittelformulierung behandelte Substrat kontinuierlich einem Trocknungsprozess unterzogen wobei die aufgebrachte Bindemittelformulierung trocknet und während des Trocknungsprozesses und der anschließenden Lagerung langsam aushärtet. Dieses Verfahren hat den Vorteil, dass keine energieintensiven Strahlungsquellen erforderlich sind. Nachteilig an diesem Verfahren ist jedoch, dass die beschichteten Substrate nicht direkt miteinander in Kontakt gebracht und beispielsweise bei der Lagerung gestapelt werden können. In einer weiteren erfindungsgemäßen Ausführungsform wird das beschichtete Substrat parallel zum Trocknungsvorgang einer solchen Menge energiereicher Strahlung ausgesetzt, dass die Beschichtung selbst in den tiefsten Schichten aushärtet. Diese Ausführung hat den Vorteil, dass die beschichteten Substrate unmittelbar nach dem Trocknungs/Bestrahlungsvorgang miteinander in Kontakt und bei der Lagerung gestapelt oder direkt weiterverarbeitet werden können. Nachteilig an diesem Verfahren sind die durch die intensive Bestrahlung resultierenden hohen Energiekosten. In einer weiteren vorteilhaften Ausführungsform erfolgt die Kopplung von Trocknung und Bestrahlung dergestalt, dass lediglich eine solch geringe Bestrahlungsenergie aufgewendet wird, welche ausreicht um lediglich die oberste Schicht der Beschichtung auszuhärten, so dass die beschichteten Substrate miteinander in Kontakt gebracht und beispielsweise gestapelt werden können. Die Aushärtung der tieferen Schichten erfolgt dann langsam bei der Lagerung der beschichteten Substrate. Diese Verfahrensvariante hat den Vorteil von niedrigen Energiekosten bei gleichzeitiger sofortiger Stapel- bzw. Weiterverarbeitungsfähigkeit.

Ein weiterer wesentlicher Vorteil der erfindungsgemäßen Bindemittelformulierungen ist, dass die Beschichtung auf Substraten mit Schattenbereichen, d.h. in Bereichen in denen die energiereiche Strahlung aufgrund einer gegebenen, von einer ebenen Fläche abweichenden komplexen Substratform, bei An- oder Aufbauten, Zwischenräumen, Seitenflächen und/oder Unterseiten ebener, flächiger Substrate oder infolge der in einer Bindemittelformulierung enthaltenen strahlungsundurchlässigen Feststoffpartikel, wie insbesondere Pigmente und/oder Füllstoffe, nicht hingelangt, innerhalb kurzer Zeit auch ohne Energieeinstrahlung vollständig aushärten. In entsprechender Weise härten auch die Beschichtungen aus, wenn die entsprechenden strahlungshärtbaren, wasseremulgierbaren Polyurethan(meth)acrylaten und diese enthaltenden Bindemittelformulierungen auf ein Substrat in Form dicker Schichten aufgebracht werden, welche die energiereiche Strahlung in der Tiefe nicht oder nur unzureichend zu durchdringen vermag.

Von Bedeutung ist ferner, dass durch die vorliegende Erfindung Bindemittelsysteme zugänglich werden, welche - auf Basis des die carbonylgruppenfreien Polyurethane A und Carbonsäurehydrazide B umfassenden Bindemittelsystems - auch ohne Einwirkung von energiereicher Strahlung, Beschichtungen mit hoher Vernetzungsdichte bzw. hoher Pendelhärte ermöglichen.

Die Erfindung wird anhand der folgenden, nicht einschränkenden Beispiele näher erläutert. Verwendete Einsatzstoffe:

| | |
|---|---|
| Lupranol® 1000/1: | Polypropylenglykol (Molare Masse: 1.970 g/mol; Produkt der BASF SE) |
| Lupraphen® 7600/1: | Polyesterpolyol aus aliphatischem Diol, Adipinsäure und aromatischer Dicarbonsäure; molare Masse: 2.000 g/mol; Produkt der BASF SE) |
| Lupraphen® 7800/1: | Polyesterpolyol aus aliphatischem Diol, Adipinsäure und aromatischer Dicarbonsäure; molare Masse: 1.000 g/mol; Produkt der BASF SE) |
| Laromer® LR8765: | Butandioldiglycidetherdiacrylat (Produkt der BASF SE) |
| Ebecryl® 3700: | Bisphenol-A-diglycidetherdiacrylat (Produkt der Allnex S.A.) |
| MEHQ: | 4-Methoxyphenol |
| Kerobit® BHT: | Stabilisator, 2,6-di-tert.-butyl-p-kresol (Produkt der BASF SE) |
| TEMPOL: | Stabilisator, 4-Hydroxy-2,2,6,6-tetramethylpiperidinyloxyl |
| Borchi® Kat 315: | Katalysator auf Basis Bismuth-Neodecanoat (Produkt der Borchers GmbH) |
| IPDI: | Isophorondiisocyanat |
| Basonat® HI 100: | Trimeres Isocyanurat von Hexamethylendiisocyanat (Produkt der BASF SE) |
| PUD-Salz: | (2-Aminoethyl)-3-aminopropansäure-Natriumsalz |
| Rheovis® PE 1330: | Verdicker (ca. 30 gew.-%ige wässrige Lösung eines Polyethers; Produkt der BASF SE) |

Herstellung der wässrigen Polyurethandispersionen

Dispersion 1 (D1)

Unter Stickstoffatmosphäre wurden in einem 2l-Glasreaktor 245,5 g Lupranol 1000/1, 15,9 g Hydroxyethylacrylat, 14,2 g Laromer LR 8765, 14,2 g Ebecryl 3700, 23,4 g 1,4-Butandiol, 1,8 g n-Pentanol, 21,2 g 2,2-(Dimethylol)propionsäure, 37,4 g Methylethylketon, 0,5 g Kerobit BHT, 0,05 g TEMPOL und 0,33 g Borchi Kat 315 bei 20 bis 25 °C (Raumtemperatur) vorgelegt und unter Rühren aufgeheizt. Bei Erreichen einer Innentemperatur von 53 °C ließ man 161,0 g Isophorondiisocyanat innerhalb von 5 Minuten zutropfen, spülte die Zulaufleitung mit 17,3 g Methylethylketon nach und ließ das Reaktionsgemisch im Ölbad bei einer Ölbadtemperatur von 100 °C weiterrühren. 3 Stunden nach Erreichen einer maximalen Innentemperatur von 114 °C wurden dem Reaktionsgemisch weitere 0,3 g Borchi Kat 315 zugeben. Daran anschließend ließ man das Reaktionsgemisch weitere 4 Stunden bei vorgenannter Ölbadtemperatur weiterrühren. Nach Entfernen des Ölbades und ohne weiteres Heizen wurde das Reaktionsgemisch unter Rühren mit 483,2 g Aceton verdünnt. Nach Entnahme einer 0,5 g Probe wurde der NCO-Gehalt des Reaktionsgemisches 0,27 Gew.-% bestimmt. Das so erhaltene Reaktionsgemisch wurde anschließend in eine 4l-Destillationsapparatur umgefüllt und auf eine Innentemperatur von 52 °C aufgeheizt. Ohne weiteres Heizen wurden 15,8 g Diethylethanolamin innerhalb von 5 Minuten zugegeben und weitere 5 Minuten nachgerührt. Daran anschließend wurden unter Rühren innerhalb von 15 Minuten 748,4 g 20 bis 25 °C warmes entionisiertes Wasser zugegeben. Daraufhin wurde bei einem Druck von 100 mbar (absolut) unter Rühren solange das Aceton abdestilliert bis eine Innentemperatur von 43 °C erreicht wurde. Das erhaltene Reaktionsgemisch wurde zuletzt auf Raumtemperatur abgekühlt.

Die erhaltene Polyurethandispersion wies einen Feststoffgehalt von 39,7 Gew.-% und einen pH-Wert von 7,5 auf. Die mittlere Teilchengröße wurde zu 672 nm bestimmt.

Im Rahmen dieser Schrift wurden die NCO-Gehalte bestimmt, indem in einem 250 ml Becherglas eine Probe des Reaktionsgemisches eingewogen und mit ca. 150 ml Aceton unter Rühren gelöst wurde. Mit einem Dispenser wurden 10 ml einer 0,1 molaren Diebutylaminlösung in N-Methyl-2-pyrrolidon (NMP) zu dosiert. Anschließend wurde mit einer 0,1 molaren Salzsäure unter Rühren mittels einem 848 Titrino plus-Gerät der Firma Metrohm bei Raumtemperatur zurücktitriert.

Die Feststoffgehalte wurden im Rahmen dieser Schrift generell bestimmt, indem eine definierte Menge der wässrigen Polyurethandispersion (ca. 0,8 g) mit Hilfe des Feuchtebestimmers HR73 der Firma Mettler Toledo bei einer Temperatur von 130 °C bis zur Gewichtskonstanz getrocknet wurde. Es wurden jeweils zwei Messungen durchgeführt und der Mittelwert dieser beiden Messungen angegeben.

Die mittleren Teilchengrößen wurden generell nach ISO 13321 mit einem High Performance Particle Sizer der Fa. Malvern bei 22 °C und einer Wellenlänge von 633 nm bestimmt.

Die pH-Wertbestimmung erfolgte generell mittels einer geeichten pH Elektrode InPro® 325X der Firma Mettler-Toledo GmbH.

Dispersion 2 (D2)

Die Herstellung von D2 erfolgte völlig analog zur Herstellung von D1 mit dem Unterschied, dass 265,9 g Lupraphen 7600/1, 62,2 g Hydroxyethylacrylat, 25,3 g 2,2-(Dimethylol)propionsäure, 39,3 g Methylethylketon, 0,5 g Kerobit BHT, 0,05 g TEMPOL und 0,65 g Borchi Kat 315 vorgelegt und aufgeheizt wurden. Beginnend mit einer Innentemperatur von 46 °C 137,6 g Isophorondiisocyanat innerhalb von 5 Minuten zugetropft und danach die Zulaufleitung mit 14,8 g Methylethylketon gespült. 3,5 Stunden nach Erreichen einer maximalen Innentemperatur von 104 °C wurde das Reaktionsgemisch (ohne weitere Zugabe von Katalysator und ohne weiteres Heizen) mit 476,7 g Aceton verdünnt. Es wurde ein NCO-Gehalt von 0,24 Gew.-% bestimmt. Nach Überführen des Reaktionsgemisches in die 4l-Destillationsapparatur wurde das Reaktionsgemisch mit 22,0 g Diethylethanolamin und mit 755,1 g entionisiertem Wasser versetzt.

Die nach der Destillation erhaltene Polyurethandispersion wies einen Feststoffgehalt von 40,5 Gew.-% und einen pH-Wert von 7,3 auf. Die mittlere Teilchengröße wurde zu 56 nm bestimmt.

Dispersion 3 (D3)

Die Herstellung von D3 erfolgte völlig analog zur Herstellung von D1 mit dem Unterschied, dass 288,8 g Lupraphen 7600/1, 65,7 g Laromer LR 8765, 3,9 g n-Pentanol, 19,8 g 2,2-(Dimethylol)propionsäure, 40,0 g Methylethylketon, 0,5 g Kerobit BHT, 0,05 g TEMPOL und 0,65 g Borchi Kat 315 vorgelegt und aufgeheizt wurden. Beginnend mit einer Innentemperatur von 41 °C wurden 117,6 g Isophorondiisocyanat innerhalb von 5 Minuten zugetropft und danach die Zulaufleitung mit 12,5 g Methylethylketon gespült. 4,5 Stunden nach Erreichen einer maximalen Innentemperatur von 100 °C wurde das Reaktionsgemisch (ohne weitere Zugabe von Katalysator und ohne weiteres Heizen) mit 481,4 g Aceton versetzt. Es wurde ein NCO-Gehalt von 0,31 Gew.-% bestimmt. Nach Überführen des Reaktionsgemisches in die 4l-Destillationsapparatur wurde das Reaktionsgemisch mit 17,2 g Diethylethanolamin und mit 749,9 g entionisiertem Wasser versetzt.

Die nach der Destillation erhaltene Polyurethandispersion wies einen Feststoffgehalt von 36,1 Gew.-% und einen pH-Wert von 7,9 auf. Die mittlere Teilchengröße wurde zu 41 nm bestimmt.

Dispersion 4 (D4)

Die Herstellung von D4 erfolgte völlig analog zur Herstellung von D1 mit dem Unterschied, dass 192,0 g Lupraphen 7600/1, 53,4 g Ebecryl 3700, 42,8 g 1,4-Butandiol, 3,3 g 1-Pentanol, 16,2 g (Dimethylol)propionsäure, 34,2 g Methylethylketon, 0,5 g Kerobit BHT, 0,05 g TEMPOL und 0,7 g Borchi Kat 315 in den 2l-Reaktor vorgelegt und aufgeheizt wurden. Beginnend mit einer Innentemperatur von 61 °C wurden 191,5 g Isophorondiisocyanat innerhalb von 5 Minuten zugetropft und danach die Zulaufleitung mit 20,7 g Methylethylketon gespült. 3 Stunden und 15 Minuten nach Erreichen einer maximalen Innentemperatur von 126 °C wurde das Reaktionsgemisch (ohne weitere Zugabe von Katalysator und ohne weiteres Heizen) mit 484,5 g Aceton verdünnt. Es wurde ein NCO-Gehalt von 0,37 Gew.-% bestimmt. Nach Überführen des Reaktionsgemisches in die 4l-Destillationsapparatur wurde das Reaktionsgemisch mit 13,9 g Diethylethanolamin und mit 746,4 g entionisiertem Wasser versetzt.

Die nach der Destillation erhaltene Polyurethandispersion wies einen Feststoffgehalt von 39,8 Gew.-% und einen pH-Wert von 7,5 auf. Die mittlere Teilchengröße wurde zu 36 nm bestimmt.

Dispersion 5 (D5)

Die Herstellung von D5 erfolgte völlig analog zur Herstellung von D1 mit dem Unterschied, dass 300,6 g Lupraphen 7600/1, 4,2 g Hydroxyethylacrylat, 63,0 g Ebecryl 3700, 22,6 g (Dimethyl-ol)propionsäure, 43,4 g Methylethylketon, 0,50 g Kerobit BHT, 0,05 g TEMPOL und 0,67 g Borchi Kat 315 in den 2l-Reaktor vorgelegt und aufgeheizt wurden. Beginnend mit einer Innentemperatur von 50 °C wurden 109,0 g Isophorondiisocyanat in 5 Minuten zugetropft und danach die Zulaufleitung mit 11,6 g Methylethylketon gespült. 3 Stunden nach Erreichen einer maximalen Temperatur von 100 °C wurden dem Reaktionsgemisch weiter 0,3 g Borchi Kat 315 zugegeben. Daran anschließend ließ man das Reaktionsgemisch weitere 2 Stunden und 20 Minuten bei vorgenannter Ölbadtemperatur weiterrühren. Nach Entfernen des Ölbades und ohne weiteres Heizen wurde das Reaktionsgemisch unter Rühren mit 484,7 g Aceton verdünnt. Es wurde ein NCO-Gehalt von 0,18 Gew.-% bestimmt. Nach Überführen des Reaktionsgemisches in die 4l-Destillationsapparatur wurde das Reaktionsgemisch mit 13,7 g Diethylethanolamin und mit 746,1 g entionisiertem Wasser versetzt.

Die nach der Destillation erhaltene Polyurethandispersion wurden mit weiteren 200 g entionisiertem Wasser verdünnt und wies dann einen Feststoffgehalt von 30,1 Gew.-% und einen pH-Wert von 7,3 auf. Die mittlere Teilchengröße wurde zu 41 nm bestimmt.

Dispersion 6 (D6)

Die Herstellung von D6 erfolgte völlig analog zur Herstellung von D1 mit dem Unterschied, dass 255,0 g Lupraphen 7600/1, 3,4 g Hydroxyethylacrylat, 44,3 g 1,4-Butandiol, 18,6 g (Dimethyl-ol)propionsäure, 35,7 g Methylethylketon, 0,50 g Kerobit BHT, 0,05 g TEMPOL und 0,67 g Borchi Kat 315 in den 2l-Reaktor vorgelegt und aufgeheizt wurden. Beginnend mit einer Innentemperatur von 55 °C wurden 180,4 g Isophorondiisocyanat innerhalb von 5 Minuten zugetropft und danach die Zulaufleitung mit 19,5 g Methylethylketon gespült. 2 Stunden und 40 Minuten nach Erreichen einer maximalen Innentemperatur von 114 °C wurde das Reaktionsgemisch (ohne weitere Zugabe von Katalysator und ohne weiteres Heizen) mit 487,1 g Aceton verdünnt. Es wurde ein NCO-Gehalt von 0,28 Gew.-% bestimmt. Nach Überführen des Reaktionsgemisches in die 4l-Destillationsapparatur wurde das Reaktionsgemisch mit 11,3 g Diethylethanolamin und mit 743,5 g entionisiertem Wasser versetzt.

Die nach der Destillation erhaltene Polyurethandispersion wies einen Feststoffgehalt von 37,9 Gew.-% und einen pH-Wert von 7,6 auf. Die mittlere Teilchengröße wurde zu 55 nm bestimmt.

Dispersion 7 (D7)

Die Herstellung von D7 erfolgte völlig analog zur Herstellung von D1 mit dem Unterschied, dass 179,4 g Lupraphen 7600/1, 3,2 g Hydroxyethlyacrylat, 48,7 g Laromer LR 8765, 41,5 g 1,4-Butandiol, 21,0 g (Dimethylol)propionsäure, 32,6 g Methylethylketon, 0,49 g Kerobit BHT, 0,05 g TEMPOL und 0,66 g Borchi Kat 315 in den 2l-Reaktor vorgelegt und aufgeheizt wurden. Beginnend mit einer Innentemperatur von 45 °C wurden 201,0 g Isophorondiisocyanat innerhalb von 5 Minuten zugetropft und danach die Zulaufleitung mit 21,8 g Methylethylketon gespült. 3,5 Stunden nach Erreichen einer maximalen Innentemperatur von 110 °C wurde das Reaktionsgemisch (ohne weiter Zugabe von Katalysator und ohne weiteres Heizen) mit 480,3 g Aceton verdünnt. Es wurde ein NCO-Gehalt von 0,42 Gew.-% bestimmt. Nach Überführen des Reaktionsgemisches in die 4l-Destillationsapparatur wurde das Reaktionsgemisch mit 18,3 g Diethylethanolamin und mit 751,0 g entionisiertem Wasser versetzt.

Die nach der Destillation erhaltene Polyurethandispersion wies einen Feststoffgehalt von 40,4 Gew.-% und einen pH-Wert von 8,1 auf. Die mittlere Teilchengröße wurde zu 36 nm bestimmt.

Dispersion 8 (D8)

Die Herstellung von D8 erfolgte völlig analog zur Herstellung von D1 mit dem Unterschied, dass 234,0 g Lupranol 1000/1, 26,8 g Hydroxyethlyacrylat, 33,5 g 1,4-Butandiol, 21,5 g (Dimethyl-ol)propionsäure, 35,1 g Methylethylketon, 0,49 g Kerobit BHT, 0,05 g TEMPOL und 0,66 g Borchi Kat 315 in den 2l-Reaktor vorgelegt und aufgeheizt wurden. Beginnend mit einer Innentemperatur von 60 °C wurden 178,5 g Isophorondiisocyanat innerhalb von 5 Minuten zugetropft und danach die Zulaufleitung mit 19,3 g Methylethylketon gespült. 4 Stunden nach Erreichen einer maximalen Innentemperatur von 110 °C wurde das Reaktionsgemisch (ohne weitere Zugabe von Katalysator und ohne weiteres Heizen) mit 479,9 g Aceton verdünnt. Es wurde ein NCO-Gehalt von 0,29 Gew.-% bestimmt. Nach Überführen des Reaktionsgemisches in die 4l-Destillationsapparatur wurde das Reaktionsgemisch mit 18,7 g Diethylethanolamin und mit 751,5 g entionisiertem Wasser versetzt.

Die nach der Destillation erhaltene Polyurethandispersion wies einen Feststoffgehalt von 37,3 Gew.-% und einen pH-Wert von 7,9 auf. Die mittlere Teilchengröße wurde zu 424 nm bestimmt.

Dispersion 9 (D9)

Die Herstellung von D9 erfolgte völlig analog zur Herstellung von D1 mit dem Unterschied, dass 245,3 g Lupraphen 7600/1, 14,6 g Hydroxyethlyacrylat, 14,2 g Laromer LR 8765, 14,2 g Ebecryl 3700, 23,3 g 1,4-Butandiol, 23,4 g (Dimethylol)propionsäure, 37,2 g Methylethylketon, 0,50 g Kerobit BHT, 0,05 g TEMPOL und 0,66 g Borchi Kat 315 in den 2l-Reaktor vorgelegt und aufgeheizt wurden. Beginnend mit einer Innentemperatur von 49 °C wurden 160,8 g Isophorondiisocyanat innerhalb von 5 Minuten zugetropft und danach die Zulaufleitung mit 17,3 g Methylethylketon gespült. 5 Stunden nach Erreichen einer maximalen Innentemperatur von 110 °C wurde das Reaktionsgemisch (ohne weitere Zugabe von Katalysator und ohne weiteres Heizen) mit 481,2 g Aceton verdünnt. Es wurde ein NCO-Gehalt von 0,29 Gew.-% bestimmt. Nach Überführen des Reaktionsgemisches in die 4l-Destillationsappratur wurde das Reaktionsgemisch mit 17,4 g Diethylethanolamin und mit 750,1 g entionisiertem Wasser versetzt.

Die nach der Destillation erhaltene Polyurethandispersion wies einen Feststoffgehalt von 38,8 Gew.-% und einen pH-Wert von 7,6 auf. Die mittlere Teilchengröße wurde zu 66 nm bestimmt.

Dispersion 10 (D10)

Die Herstellung von D10 erfolgte völlig analog zur Herstellung von D1 mit dem Unterschied, dass 382,6 g Lupranol 1000/1, 4,3 g Hydroxyethlyacrylat, 21,4 g (Dimethylol)propionsäure, 45,4 g Methylethylketon, 0,49 g Kerobit BHT, 0,05 g TEMPOL und 0,66 g Borchi Kat 315 in den 2l-Reaktor vorgelegt und aufgeheizt wurden. Beginnend mit einer Innentemperatur von 46 °C wurden 86,2 g Isophorondiisocyanat innerhalb von 5 Minuten zugetropft und danach die Zulaufleitung mit 9,0 g Methylethylketon gespült. 6 Stunden und 15 Minuten nach Erreichen einer maximalen Innentemperatur von 100 °C wurde das Reaktionsgemisch (ohne weitere Zugabe von Katalysator und ohne weiteres Heizen) mit 480,1 g Aceton verdünnt. Es wurde ein NCO-Gehalt von 0,16 Gew.-% bestimmt. Nach Überführen des Reaktionsgemisches in die 4l-Destillationsapparatur wurde das Reaktionsgemisch mit 18,5 g Diethylethanolamin und mit 851,3 g entionisiertes Wasser versetzt.

Der nach der Destillation erhaltenen Polyurethandispersion wurden weitere 400 g entionisiertes Wasser zugegeben. Sie wies einen Feststoffgehalt von 29,3 Gew.-% und einen pH-Wert von 8,0 auf. Die mittlere Teilchengröße wurde zu 26 nm bestimmt.

Dispersion 11 (D11)

Die Herstellung von D11 erfolgte völlig analog zur Herstellung von D1 mit dem Unterschied, dass 188,3 g Lupranol 1000/1, 52,1 g Laromer LR 8765, 41,7 g 1,4-Butandiol, 3,0 g 1-Pentanol, 17,5 g (Dimethylol)propionsäure, 33,6 g Methylethylketon, 0,50 g Kerobit BHT, 0,05 g TEMPOL und 0,67 g Borchi Kat 315 in den 2l-Reaktor vorgelegt und aufgeheizt wurden. Beginnend mit einer Innentemperatur von 40 °C wurden 199,7 g Isophorondiisocyanat innerhalb 5 Minuten zugetropft und danach die Zulaufleitung mit 21,6 g Methylethylketon gespült. 3,5 Stunden nach Erreichen einer maximalen Innentemperatur von 115 °C wurde das Reaktionsgemisch (ohne weitere Zugabe von Katalysator und ohne weiteres Heizen) mit 487,7 g Aceton verdünnt. Es wurde ein NCO-Gehalt von 0,57 Gew.-% bestimmt. Nach Überführen des Reaktionsgemisches in die 4l-Destillationsapparatur wurde das Reaktionsgemisch mit 10,7 g Diethylethanolamin und 742,8 g entionisiertem Wasser versetzt.

Die nach der Destillation erhaltene Polyurethandispersion wies einen Feststoffgehalt von 41,7 Gew.-% und einen pH-Wert von 7,7 auf. Die mittlere Teilchengröße wurde zu 684 nm bestimmt.

Dispersion 12 (D12)

Die Herstellung von D12 erfolgte völlig analog zur Herstellung von D1 mit dem Unterschied, dass 180,7 g Lupranol 1000/1, 3,0 g Hydroxyethylacrylat, 49,1 g Ebecryl 3700, 41,8 g 1,4-Butandiol, 24,6 g (Dimethylol)propionsäure, 33,2 g Methylethylketon, 0,50 g Kerobit BHT, 0,05 g TEMPOL und 0,66 g Borchi Kat 315 in den 2l-Reaktor vorgelegt und aufgeheizt wurden. Beginnend mit einer Innentemperatur von 56 °C wurden 198,9 g Isophorndiisocyanat innerhalb von 8 Minuten zugetropft und danach die Zulaufleitung mit 21,6 g Methylethylketon gespült. 6,5 Stunden nach Erreichen einer maximalen Innentemperatur von 104 °C wurde das Reaktionsgemisch (ohne weitere Zugabe von Katalysator und ohne weiteres Heizen) mit 483,5 g Aceton verdünnt. Es wurde ein NCO-Gehalt von 0,34 Gew.-% bestimmt. Nach Überführen des Reaktionsgemisches in die 4l-Destillationsapparatur wurde das Reaktionsgemisch mit 15,0 g Diehtylethanolamin und 747,5 g entionisiertem Wasser versetzt.

Die nach der Destillation erhaltene Polyurethandispersion wies einen Feststoffgehalt von 38,8 Gew.-% und einen pH-Wert von 7,4 auf. Die mittlere Teilchengröße wurde zu 199 nm bestimmt.

Dispersion 13 (D13)

Die Herstellung von D13 erfolgte völlig analog zur Herstellung von D1 mit dem Unterschied, dass 277,2 g Lupranol 1000/1, 65,9 g Ebecryl 3700, 3,9 g 1-Pentanol, 26,8 g (Dimethyl-ol)propionsäure, 41,5 g Methylethylketon, 0,49 g Kerobit BHT, 0,05 g TEMPOL und 0,65 g Borchi Kat 315 in den 2l-Reaktor vorgelegt und aufgeheizt wurden. Beginnend mit einer Innentemperatur von 47 °C wurden 116,0 g Isophorondiisocyanat innerhalb von 5 Minuten zugetropft und danach die Zulaufleitung mit 12,3 g Methylethylketon gespült. 6 Stunden nach Erreichen einer maximalen Innentemperatur von 85 °C wurde das Reaktionsgemisch (ohne weitere Zugabe von Katalysator und ohne weiteres Heizen) mit 475,5 g Aceton verdünnt. Es wurde ein NCO-Gehalt von 0,22 Gew.-% bestimmt. Nach Überführen des Reaktionsgemisches in die 4l-Destillationsapparatur wurde das Reaktionsgemisch mit 23,2 g Diethylethanolamin und 756,5 g entionisiertem Wasser versetzt. Darüber hinaus wurden während der Destillation wurden weitere 700 g entionisiertes Wasser zugegeben.

Die nach der Destillation erhaltene Polyurethandispersion wies einen Feststoffgehalt von 25,7 Gew.-% und einen pH-Wert von 8,0 auf. Die mittlere Teilchengröße wurde zu 31 nm bestimmt.

Dispersion 14 (D14)

Die Herstellung von D14 erfolgte völlig analog zur Herstellung von D1 mit dem Unterschied, dass 276,0 g Lupraphen 7600/1, 32,7 g Hydroxyethylacrylat, 12,4 g 1,4-Butandiol, 26,3 g (Di-methylol)propionsäure, 38,6 g Methylethylketon, 0,49 g Kerobit BHT, 0,05 g TEMPOL und 0,65 g Borchi Kat 315 in den 2l-Reaktor vorgelegt und aufgeheizt wurden. Beginnend mit einer Innentemperatur von 52 °C wurden 142,8 g Isophorondiisocyanat innerhalb von 5 Minuten zugetropft und danach die Zulaufleitung mit 15,3 g Methylethylketon gespült. 3 Stunden und 15 Minuten nach Erreichen einer maximalen Innentemperatur von 105 °C wurde das Reaktionsgemisch (ohne weitere Zugabe von Katalysator und ohne weiteres Heizen) mit 475,9 g Aceton verdünnt. Es wurde ein NCO-Gehalt von 0,20 Gew.-% bestimmt. Nach Überführen des Reaktionsgemisches in die 4l-Destillationsapparatur wurde das Reaktionsgemisch mit 22,8 g Diethylethanolamin und 756,0 g entionisiertem Wasser versetzt.

Die nach der Destillation erhaltene Polyurethandispersion wies einen Feststoffgehalt von 42,0 Gew.-% und einen pH-Wert von 7,6 auf. Die mittlere Teilchengröße wurde zu 31 nm bestimmt.

Dispersion 15 (D15)

Dier Herstellung von D15 erfolgte völlig analog zur Herstellung von D1 mit dem Unterschied, dass 213,9 g Lupraphen 7600/1, 28,4 g 1,4-Butandiol, 18,3 g (Dimethylol)propionsäure, 47,2 g Laromer 8765, 34,2 g Methylethylketon, 0,49 g Kerobit BHT und 0,05 g TEMPOL in den 2l-Reaktor vorgelegt und aufgeheizt wurden. Beginnend mit einer Innentemperatur von 48 °C wurden 185,1 g Isophorondiisocyanat innerhalb von 5 Minuten zugetropft und danach die Zulaufleitung mit 20,0 g Methylethylketon gespült. 3 Stunden nach Erreichen einer maximalen Innentemperatur von 95 °C wurde das Reaktionsgemisch (ohne weitere Zugabe von Katalysator und ohne weiteres Heizen) mit 471,3 g Aceton verdünnt. Es wurde ein NCO-Gehalt von 1,10 Gew.-% bestimmt. Nach Überführen des Reaktionsgemisches in die 4l-Destillationsapparatur wurde das Reaktionsgemisch nacheinander mit 2,1 g Isophorondiamin, 16,0 g Diethylethanolamin, 724,9 g entionisiertem Wasser und einer Lösung aus 5,7 g Diethyltriamin und 32,4 g entionisiertem Wasser versetzt.

Die nach der Destillation erhaltene Polyurethandispersion wies einen Feststoffgehalt von 40,8 Gew.-% und einen pH-Wert von 8,0 auf. Die mittlere Teilchengröße wurde zu 61 nm bestimmt.

Dispersion 16 (D16)

Die Herstellung von D16 erfolgte völlig analog zur Herstellung von D1 mit dem Unterschied, dass 204,1 g Lupraphen 7600/1, 25,5 g 1,4-Butandiol, 18,1g (Dimethylol)propionsäure, 69,3 g Ebecryl 3700, 35,2 g Methylethylketon, 0,49 g Kerobit BHT und 0,05 g TEMPOL in den 2l-Reaktor vorgelegt und aufgeheizt wurden. Beginnend mit einer Innentemperatur von 50 °C wurden 176,6 g Isophorondiisocyanat innerhalb von 5 Minuten zugetropft und danach die Zulaufleitung mit 19,1 g Methylethylketon gespült. 3 Stunden nach Erreichen einer maximalen Innentemperatur von 101 °C wurde das Reaktionsgemisch (ohne weitere Zugabe von Katalysator und ohne weiteres Heizen) mit 472,0 g Aceton verdünnt. Es wurde ein NCO-Gehalt von 1,17 Gew.-% bestimmt. Nach Überführen des Reaktionsgemisches in die 4l-Destillationsapparatur wurde das Reaktionsgemisch mit 2,0 g Isophorondiamin, 15,9 g Diethylethanolamin, 725,3 g entionisiertem Wasser und einer Lösung aus 5,5 g Diethylentriamin und 31,0 g entionisiertem Wasser versetzt.
Die nach der Destillation erhaltene Polyurethandispersion wies einen Feststoffgehalt von 40,9 Gew.-% und einen pH-Wert von 7,7 auf. Die mittlere Teilchengröße wurde zu 61 nm bestimmt.

Dispersion 17 (D17)

Die Herstellung von D17 erfolgte völlig analog zur Herstellung von D1 mit dem Unterschied, dass 277,1 g Lupraphen 7600/1, 32,8 g Hydroxyethylacrylat, 16,3 g 1,4-Butandiol, 20,6 g (Di-methylol)propionsäure, 38,5 g Methylethylketon, 0,49 g Kerobit BHT, 0,05 g TEMPOL und 0,65 g Borchi Kat 315 in den 2l-Reaktor vorgelegt und aufgeheizt wurden. Beginnend mit einer Innentemperatur von 49 °C wurden 143,4 g Isophorondiisocyanat innerhalb von 5 Minuten zugetropft und danach die Zulaufleitung mit 15,4 g Methylethylketon gespült. 3 Stunden nach Erreichen einer maximalen Innentemperatur von 102 °C wurde das Reaktionsgemisch (ohne weitere Zugabe von Katalysator und ohne weiteres Heizen) mit 475,8 g Aceton verdünnt. Es wurde ein NCO-Gehalt von 0,23 Gew.-% bestimmt. Nach Überführen des Reaktionsgemisches in die 4l-Destillationsapparatur wurde das Reaktionsgemisch mit 18,0 g Diethylethanolamin und 756,1 g entionisiertem Wasser versetzt.
Die nach der Destillation erhaltene Polyurethandispersion wies einen Feststoffgehalt von 39,9 Gew.-% und einen pH-Wert von 7,4 auf. Die mittlere Teilchengröße wurde zu 36 nm bestimmt.

Dispersion 18 (D18)

Die Herstellung von D18 erfolgte völlig analog zur Herstellung von D1 mit dem Unterschied, dass 250,8 g Lupraphen 7600/1, 14,9 g Hydroxyethlyacrylat, 14,5 g Laromer LR 8765, 14,5 g Ebecryl 3700, 23,9 g 1,4-Butandiol, 23,9 g (Dimethylol)propionsäure, 38,1 g Methylethylketon, 0,51 g Kerobit BHT, 0,05 g TEMPOL und 0,68 g Borchi Kat 315 in den 2l-Reaktor vorgelegt und aufgeheizt wurden. Beginnend mit einer Innentemperatur von 49 °C wurden 164,5 g Isophorondiisocyanat innerhalb von 5 Minuten zugetropft und danach die Zulaufleitung mit 17,7 g Methylethylketon gespült. 4 Stunden und 45 Minuten nach Erreichen einer maximalen Innentemperatur von 105 °C wurde das Reaktionsgemisch (ohne weitere Zugabe von Katalysator und ohne weiteres Heizen) mit 492,2 g Aceton verdünnt. Es wurde ein NCO-Gehalt von 0,25 Gew.-% bestimmt. Nach Überführen des Reaktionsgemisches in die 4l-Destillationsapparatur wurde das Reaktionsgemisch mit 60,6 g einer 10 gew.-%igen wässrigen Natronlauge und 683,3 g entionisiertem Wasser versetzt. Darüber hinaus wurden während der Destillation weitere 300 g entionisiertes Wasser zugegeben.
Die nach der Destillation erhaltene Polyurethandispersion wies einen Feststoffgehalt von 32,6 Gew.-% und einen pH-Wert von 7,7 auf. Die mittlere Teilchengröße wurde zu 31 nm bestimmt.

Dispersion 19 (D19)

Die Herstellung D19 erfolgte völlig analog zur Herstellung von D1 mit dem Unterschied, dass 283,5 g Lupraphen 7600/1, 33,6 g Hydroxyethylacrylat, 20,5 g 1,4-Butandiol, 15,4 g (Dimethyl-ol)propionsäure, 39,2 g Methylethylketon, 0,50 g Kerobit BHT, 0,05 g TEMPOL und 0,67 g Borchi Kat 315 in den 2l-Reaktor vorgelegt und aufgeheizt wurden. Beginnend mit einer Innentemperatur von 52 °C wurden 146,7 g Isophorondiisocyanat innerhalb von 5 Minuten zugetropft und danach die Zulaufleitung mit 15,8 g Methylethylketon gespült. 2,5 Stunden nach Erreichen einer maximalen Innentemperatur von 100 °C wurde das Reaktionsgemisch (ohne weitere Zugabe von Katalysator und ohne weiteres Heizen) mit 485,1 g Aceton verdünnt. Es wurde ein NCO-Gehalt von 0,23 Gew.-% bestimmt. Nach Überführen des Reaktionsgemisches in die 4l-Destillationsapparatur wurde das Reaktionsgemisch mit 13,4 g Diethylethanolamin und 745,7 g entionisiertem Wasser versetzt.
Die nach der Destillation erhaltene Polyurethandispersion wies einen Feststoffgehalt von 42,4 Gew.-% und einen pH-Wert von 7,7 auf. Die mittlere Teilchengröße wurde zu 449 nm bestimmt.

Dispersion 20 (D20)

Die Herstellung von D20 erfolgte völlig analog zur Herstellung von D1 mit dem Unterschied, dass 251,9 g Lupraphen 7600/1, 15,0 g Hydroxyethlyacrylat, 14,6 g Laromer LR 8765, 14,6 g Ebecryl 3700, 26,4 g 1,4-Butandiol, 20,4 g (Dimethylol)propionsäure, 38,1 g Methylethylketon, 0,51 g Kerobit BHT, 0,05 g TEMPOL und 0,68 g Borchi Kat 315 in den 2l-Reaktor vorgelegt und aufgeheizt wurden. Beginnend mit einer Innentemperatur von 55 °C wurden 165,1 g Isophorondiisocyanat innerhalb von 5 Minuten zugetropft und danach die Zulaufleitung mit 17,8 g Methylethylketon gespült. 4 Stunden und 10 Minuten nach Erreichen einer maximalen Innentemperatur von 111 °C wurde das Reaktionsgemisch (ohne weitere Zugabe von Katalysator und ohne weiteres Heizen) mit 493,0 g Aceton verdünnt. Es wurde ein NCO-Gehalt von 0,25 Gew.-% bestimmt. Nach Überführen des Reaktionsgemisches in die 4l-Destillationsapparatur wurde das Reaktionsgemisch mit 51,7 g einer 10 gew.-%igen wässrigen Natronlauge und 690,3 g entionisiertem Wasser versetzt. Darüber hinaus wurden während der Destillation weitere 350 g entionisiertes Wasser zugegeben.

Die nach der Destillation erhaltene Polyurethandispersion wies einen Feststoffgehalt von 32,6 Gew.-% und einen pH-Wert von 7,9 auf. Die mittlere Teilchengröße wurde zu 35 nm bestimmt.

Dispersion 21 (D21)

Die Herstellung von D21 erfolgte völlig analog zur Herstellung von D1 mit dem Unterschied, dass 281,7 g Lupraphen 7600/1, 33,4 g Hydroxyethylacrylat, 18,6 g 1,4-Butandiol, 18,0 g (Di-methylol)propionsäure, 39,1 g Methylethylketon, 0,50 g Kerobit BHT, 0,05 g TEMPOL und 0,66 g Borchi Kat 315 in den 2l-Reaktor vorgelegt und aufgeheizt. Beginnend mit einer Innentemperatur von 50 °C wurden 145,8 g Isopohorondiisocyanat innerhalb von 5 Minuten zugetropft und danach die Zulaufleitung mit 15,7 g Methylethylketon gespült. 2 Stunden nach Erreichen einer maximalen Innentemperatur von 100 °C wurde das Reaktionsgemisch (ohne weitere Zugabe von Katalysator und ohne weiteres Heizen) mit 482,9 g Aceton verdünnt. Es wurde ein NCO-Gehalt von 0,23 Gew.-% bestimmt. Nach Überführen des Reaktionsgemisches in die 4l-Destillationsapparatur wurde das Reaktionsgemisch mit 15,6 g Diethylethanolamin und 748,1 g entionisiertem Wasser versetzt.

Die nach der Destillation erhaltene Polyurethandispersion wies einen Feststoffgehalt von 42,5 Gew.-% und einen pH-Wert von 7,5 auf. Die mittlere Teilchengröße wurde zu 309 nm bestimmt.

Dispersion 22 (D22)

Die Herstellung von D22 erfolgte völlig analog zur Herstellung von D1 mit dem Unterschied, dass 252,6 g Lupraphen 7600/1, 15,0 g Hydroxyethlyacrylat, 14,6 g Laromer LR 8765, 14,6 g Ebecryl 3700, 28,1 g Butandiol, 18,0 g (Dimethylol)propionsäure, 38,1 g Methylethylketon, 0,51 g Kerobit BHT, 0,05 g TEMPOL und 0,68 g Borchi Kat 315 in den 2l-Reaktor vorgelegt und aufgeheizt wurden. Beginnend mit einer Innentemperatur von 65 °C wurden 165,6 g Isophorondiisocyanat innerhalb von 5 Minuten zugetropft und danach die Zulaufleitung mit 17,8 g Methylethylketon gespült. 4 Stunden nach Erreichen einer maximalen Innentemperatur von 114 °C wurde das Reaktionsgemisch (ohne weitere Zugabe von Katalysator und ohne weiteres Heizen) mit 493,6 g Aceton verdünnt. Es wurde ein NCO-Gehalt von 0,27 Gew.-% bestimmt. Nach Überführen des Reaktionsgemisches in die 4-Destillationsapparatur wurde das Reaktionsgemisch mit 45,6 g einer 10 gew.-%igen wässrigen Natronlauge und 695,2 g entionisiertem Wasser versetzt. Darüber hinaus wurden während der Destillation weitere 250 g entionisiertes Wasser zugegeben.

Die nach der Destillation erhaltene Polyurethandispersion wies einen Feststoffgehalt von 34,3 Gew.-% und einen pH-Wert von 8,1 auf. Die mittlere Teilchengröße wurde zu 39 nm bestimmt.

Dispersion 23 (D23)

Die Herstellung von D23 erfolgte völlig analog zur Herstellung von D1 mit dem Unterschied, dass 173,2 g Lupraphen 7600/1, 23,0 g (Dimethylol)propionsäure, 147,4 g Ebecryl 3700, 38,2 g Methylethylketon, 0,49 g Kerobit BHT und 0,05 g TEMPOL in den 2l-Reaktor vorgelegt und aufgeheizt wurden. Beginnend mit einer Innentemperatur von 50 °C wurden 149,7 g Isophorondiisocyanat innerhalb von 5 Minuten zugetropft und danach die Zulaufleitung mit 16,1 g Methylethylketon gespült. 4 Stunden nach Erreichen einer maximalen Innentemperatur von 100 °C wurde das Reaktionsgemisch (ohne weitere Zugabe von Katalysator und ohne weiteres Heizen) mit 471,7 g Aceton verdünnt. Es wurde ein NCO-Gehalt von 1,00 Gew.-% bestimmt. Nach Überführen des Reaktionsgemisches in die 4l-Destillationsapparatur wurde das Reaktionsgemisch mit 1,7 g Isophorondiamin, 18,0 g Diethylethanolamin, 729,5 g entionisiertem Wasser und einer Lösung aus 4,6 g Diethylentriamin und 26,3 g entionisiertem Wasser versetzt. Darüber hinaus wurden während der Destillation weitere 100 g entionisiertes Wasser zugegeben.

Die nach der Destillation erhaltene Polyurethandispersion wies einen Feststoffgehalt von 36,3 Gew.-% und einen pH-Wert von 7,7 auf. Die mittlere Teilchengröße wurde zu 55 nm bestimmt.

Dispersion 24 (D24)

Die Herstellung von D24 erfolgte völlig analog zur Herstellung von D1 mit dem Unterschied, dass 379,1 g Lupraphen 7600/1, 22,5 g Hydroxyethlyacrylat, 21,9 g Laromer LR 8765, 21,9 g Ebecryl 3700, 33,2 g 1,4-Butandiol, 40,4 g (Dimethylol)propionsäure, 57,7 g Methylethylketon, 0,77 g Kerobit BHT, 0,08 g TEMPOL und 1,02 g Borchi Kat 315 in den 2l-Reaktor vorgelegt und aufgeheizt wurden. Beginnend mit einer Innentemperatur von 50 °C wurden 248,5 g Isophorondiisocyanat innerhalb von 5 Minuten zugetropft und danach die Zulaufleitung mit 26,8 g Methylethylketon gespült. 3 Stunden nach Erreichen einer maximalen Innentemperatur von 107 °C wurde das Reaktionsgemisch (ohne weitere Zugabe von Katalysator und ohne weiteres Heizen) mit 745,2 g Aceton verdünnt. Es wurde ein NCO-Gehalt von 0,26 Gew.-% bestimmt (das erhaltene Produkt wird nachfolgend auch als Präpolymer bezeichnet). Nach Überführen eines Anteils von 800 g des Reaktionsgemisches in die 4l-Destillationsapparatur wurde das Reaktionsgemisch mit 15,4 g Triethylamin und 589,3 g entionisiertem Wasser versetzt. Darüber hinaus wurden während der Destillation weitere 100 g und nach der Destillation weitere 200 g entionisiertes Wasser zugegeben.

Die dabei erhaltene Polyurethandispersion wies einen Feststoffgehalt von 30,2 Gew.-% und einen pH-Wert von 7,3 auf. Die mittlere Teilchengröße wurde zu 38 nm bestimmt.

Dispersion 25 (D25)

730 g des Präpolymers aus Versuch 24 wurden in die 4l-Destillationsapparatur eingewogen und auf 53 °C aufgeheizt. Das Reaktionsgemisch wurde mit 55,4 g einer 10 gew.-%igen wässrigen Natronlauge und mit 487,8 g entionisiertem Wasser versetzt und anschließend destilliert. Darüber hinaus wurden während der Destillation weitere 200 g entionisiertes Wasser zugegeben.

Die nach der Destillation erhaltene Polyurethandispersion wies einen Feststoffgehalt von 35,1 Gew.-% und einen pH-Wert von 7,5 auf. Die mittlere Teilchengröße wurde zu 38 nm bestimmt.

Dispersion 26 (D26)

Die Herstellung von D26 erfolgte völlig analog zur Herstellung von D1 mit dem Unterschied, dass 179,8 g Lupraphen 7600/1, 5,0 g Hydroxyethlyacrylat, 46,1 g Laromer LR 8765, 41,5 g 1,4-Butandiol, 21,0 g (Dimethylol)propionsäure, 32,6 g Methylethylketon, 0,49 g Kerobit BHT, 0,05 g TEMPOL und 0,66 g Borchi Kat 315 in den 2l-Reaktor vorgelegt und aufgeheizt wurden. Beginnend mit einer Innentemperatur von 57 °C wurden 201,3 g Isophorondiisocyanat innerhalb von 5 Minuten zugetropft und danach die Zulaufleitung mit 21,8 g Methylethylketon gespült. 4 Stunden nach Erreichen einer maximalen Innentemperatur von 117 °C wurde das Reaktionsgemisch (ohne weitere Zugabe von Katalysator und ohne weiteres Heizen) mit 480,3 g Aceton verdünnt. Es wurde ein NCO-Gehalt von 0,36 Gew.-% bestimmt. Nach Überführen des Reaktionsgemisches in die 4l-Destillationsapparatur wurde das Reaktionsgemisch mit 18,3 g Diethylethanolamin und 751,1 g entionisiertes Wasser versetzt. Darüber hinaus wurden nach der Destillation weitere 250 g entionisiertes Wasser zugegeben.

Die dabei erhaltene Polyurethandispersion wies einen Feststoffgehalt von 29,1 Gew.-% und einen pH-Wert von 7,6 auf. Die mittlere Teilchengröße wurde zu 35 nm bestimmt.

Dispersion 27 (D27)

Die Herstellung von D27 erfolgte völlig analog zur Herstellung von D1 mit dem Unterschied, dass 246,6 g Lupraphen 7600/1, 14,6 g Hydroxyethlyacrylat, 14,3 g Laromer LR 8765, 14,2 g Ebecryl 3700, 21,6 g 1,4-Butandiol, 26,6 g (Dimethylol)propionsäure, 37,5 g Methylethylketon, 0,50 g Kerobit BHT, 0,05 g TEMPOL und 0,67 g Borchi Kat 315 in den 2l-Reaktor vorgelegt und aufgeheizt wurden. Beginnend mit einer Innentemperatur von 50 °C wurden 161,7 g Isophorondiisocyanat innerhalb von 5 Minuten zugetropft und danach die Zulaufleitung mit 17,4 g Methylethylketon gespült. 3 Stunden nach Erreichen einer maximalen Innentemperatur von 106 °C wurde das Reaktionsgemisch (ohne weitere Zugabe von Katalysator und ohne weiteres Heizen) mit 484,7 g Aceton verdünnt. Es wurde ein NCO-Gehalt von 0,28 Gew.-% bestimmt. Nach Überführen des Reaktiongemisches in die 4l-Destillationsapparatur wurde das Reaktionsgemisch mit 13,8 g Diethylethanolamin und 746,2 g entionisiertem Wasser versetzt.

Die nach der Destillation erhaltene Polyurethandispersion wies einen Feststoffgehalt von 43,4 Gew.-% und einen pH-Wert von 6,9 auf. Die mittlere Teilchengröße wurde zu 344 nm bestimmt.

Dispersion 28 (D28)

Die Herstellung von D28 erfolgte völlig analog zur Herstellung von D1 mit dem Unterschied, dass 253,8 g Lupraphen 7600/1, 15,1 g Hydroxyethlyacrylat, 14,7 g Laromer LR 8765, 14,7 g Ebecryl 3700, 31,7 g 1,4-Butandiol,

12,9 g (Dimethylol)propionsäure, 38,1 g Methylethylketon, 0,51 g Kerobit BHT, 0,05 g TEMPOL und 0,68 g Borchi Kat 315 in den 2l-Reaktor vorgelegt und aufgeheizt wurden. Beginnend mit einer Innentemperatur von 63 °C wurden 166,4 g Isophorondiisocyanat innerhalb von 5 Minuten zugetropft und danach die Zulaufleitung mit 17,9 g Methylethylketon gespült. 4 Stunden und 10 Minuten nach Erreichen einer maximalen Innentemperatur von 112 °C wurde das Reaktionsgemisch (ohne weitere Zugabe von Katalysator und ohne weiteres Heizen) mit 494,3 g Aceton verdünnt. Es wurde ein NCO-Gehalt von 0,25 Gew.-% bestimmt. Nach Überführen des Reaktionsgemisches in die 4l-Destillationsapparatur wurde das Reaktionsgemisch mit 38,5 g einer 10 gew.-%igen wässrigen Natronlauge und 700,8 g entionisiertem Wasser versetzt. Darüber hinaus wurden während der Destillation weitere 50 g entionisiertes Wasser zugegeben.

Die nach der Destillation erhaltene Polyurethandispersion wies einen Feststoffgehalt von 39,3 Gew.-% und einen pH-Wert von 8,0 auf. Die mittlere Teilchengröße wurde zu 87 nm bestimmt.

Dispersion 29 (D29)

Die Herstellung von D29 erfolgte völlig analog zur Herstellung von D1 mit dem Unterschied, dass 254,3 g Lupraphen 7600/1, 15,1 g Hydroxyethlyacrylat, 14,7 g Laromer LR 8765, 14,7 g Ebecryl 3700, 32,9 g 1,4-Butandiol, 11,3 g (Dimethylol)propionsäure, 38,1 g Methylethylketon, 0,51 g Kerobit BHT, 0,05 g TEMPOL und 0,68 g Borchi Kat 315 in den 2l-Reaktor vorgelegt und aufgeheizt wurden. Beginnend mit einer Innentemperatur von 52 °C wurden 166,7 g Isophorondiisocyanat innerhalb von 5 Minuten zugetropft und danach die Zulaufleitung mit 18,0 g Methylethylketon gespült. 3,5 Stunden nach Erreichen einer maximalen Innentemperatur von 109 °C wurde das Reaktionsgemisch (ohne weitere Zugabe von Katalysator und ohne weiteres Heizen) mit 494,8 g Aceton verdünnt. Es wurde ein NCO-Gehalt von 0,26 Gew.-% bestimmt. Nach Überführen des Reaktionsgemisches in die 4l-Destillationsapparatur wurde das Reaktionsgemisch mit 33,7 g einer 10 gew.-%igen wässrigen Natronlauge und mit 704,6 g entionisiertem Wasser versetzt.

Die nach der Destillation erhaltene Polyurethandispersion wies einen Feststoffgehalt von 42,8 Gew.-% und einen pH-Wert von 8,0 auf. Die mittlere Teilchengröße wurde zu 175 nm bestimmt.

Dispersion 30 (D30)

Die Herstellung von D30 erfolgte völlig analog zur Herstellung von D1 mit dem Unterschied, dass 214,8 g Lupraphen 7600/1, 30,5 g 1,4-Butandiol, 15,7 g (Dimethylol)propionsäure, 47,6 g Laromer 8765, 34,3 g Methylethylketon, 0,50 g Kerobit BHT und 0,05 g TEMPOL in den 2l-Reaktor vorgelegt und aufgeheizt wurden. Beginnend mit einer Innentemperatur von 50 °C wurden 186,4 g Isophorondiisocyanat innerhalb von 5 Minuten zugetropft und danach die Zulaufleitung mit 20,2 g Methylethylketon gespült. 3 Stunden nach Erreichen einer maximalen Innentemperatur von 112 °C wurde das Reaktionsgemisch (ohne weitere Zugabe von Katalysator und ohne weiteres Heizen) mit 473,4 g Aceton verdünnt. Es wurde ein NCO-Gehalt von 1,20 Gew.-% bestimmt. Nach Überführen des Reaktionsgemisches in die 4l-Destillationsapparatur wurde das Reaktionsgemisch mit 2,15 g Isophorondiamin, 13,7 g Diethlethanolamin, 722,4 g entionisiertem Wasser und einer Lösung aus 5,8 g Diethylentriamin und 32,6 g entionisiertem Wasser versetzt.

Die nach der Destillation erhaltene Polyurethandispersion wies einen Feststoffgehalt von 41,2 Gew.-% und einen pH-Wert von 7,7 auf. Die mittlere Teilchengröße wurde zu 115 nm bestimmt.

Dispersion 31 (D31)

Die Herstellung von D31 erfolgte völlig analog zur Herstellung von D1 mit dem Unterschied, dass 236,1 g Lupraphen 7600/1, 31,5 g 1,4-Butandiol, 18,0 g (Dimethylol)propionsäure, 80,3 g Ebecryl 3700, 40,6 g Methylethylketon, 0,57 g Kerobit BHT und 0,06 g TEMPOL in den 2l-Reaktor vorgelegt und aufgeheizt wurden. Beginnend mit einer Innentemperatur von 52 °C wurden 204,8 g Isophorondiisocyanat innerhalb von 5 Minuten zugetropft und danach die Zulaufleitung mit 22,1 g Methylethylketon gespült. 4 Stunden und 40 Minuten nach Erreichen einer steigenden Innentemperatur von 90 °C (bis 95 °C) wurde das Reaktionsgemisch (ohne weitere Zugabe von Katalysator und ohne weiteres Heizen) mit 545,8 g Aceton verdünnt. Es wurde ein NCO-Gehalt von 1,17 Gew.-% bestimmt. Nach Überführen des Reaktionsgemisches in die 4l-Destillationsapparatur wurde das Reaktionsgemisch mit 2,4 g Isophprondiamin, 15,8 g Diethylethanolamin, 559,8 g entionisiertem Wasser und einer Lösung aus 6,3 g Diethylentriamin und 35,8 g entionisiertem Wasser versetzt.

Die nach der Destillation erhaltene Polyurethandispersion wies einen Feststoffgehalt von 51,2 Gew.-% und einen pH-Wert von 7,5 auf. Die mittlere Teilchengröße wurde zu 350 nm bestimmt.

Dispersion 32 (D32)

Die Herstellung von D32 erfolgte völlig analog zur Herstellung von D1 mit dem Unterschied, dass 187,9 g Lupraphen 7600/1, 23,4 g (Dimethylol)propionsäure, 118,1 g Laromer 8765, 36,6 g Methylethylketon, 0,49 g Kerobit

BHT und 0,05 g TEMPOL in den 2l-Reaktor vorgelegt und aufgeheizt wurden. Beginnend mit einer Innentemperatur von 45 °C wurden 162,6 g Isophorondiisocyanat innerhalb von 5 Minuten zugetropft und danach die Zulaufleitung mit 17,5 g Methylethylketon gespült. 2 Stunden und 10 Minuten nach Erreichen einer maximalen Innentemperatur von 102 °C wurde das Reaktionsgemisch (ohne weitere Zugabe von Katalysator und ohne weiteres Heizen) mit 470,5 g Aceton verdünnt. Es wurde ein NCO-Gehalt von 1,06 Gew.-% bestimmt. Nach Überführen des Reaktionsgemisches in die 4l-Destillationsapparatur wurde das Reaktionsgemisch mit 1,8 g Isophorondiamin, 18,5 g Diethylethanolamin, 729,1 g entionisiertem Wasser und einer Lösung aus 5,0 g Diethylentriamin und 28,5 g entionisiertem Wasser versetzt. Darüber hinaus wurden während der Destillation weitere 300 g entionisiertes Wasser hinzugegeben.

Die nach der Destillation erhaltene Polyurethandispersion wies einen Feststoffgehalt von 31,5 Gew.-% und einen pH-Wert von 7,7 auf. Die mittlere Teilchengröße wurde zu 72 nm bestimmt.

Dispersion 33 (D33)

Die Herstellung von D33 erfolgte völlig analog zur Herstellung von D1 mit dem Unterschied, dass 91,5 g Lupraphen 7800/1, 119,1 g Hydroxyethylmethylacrylat, 44,1 g 1,4-Butandiol, 200,1 g Aceton, 0,80 g Kerobit BHT, 0,05 g TEMPOL, 0,47g 4-Methoxyphenol und 0,57 g Borchi Kat 315 in den 2l-Reaktor vorgelegt und aufgeheizt wurden. Beginnend mit einer Innentemperatur von 48 °C wurden 215,8 g Isophorondiisocyanat und 64,8 g Basonat HI 100 innerhalb von 15 min zugetropft. 2 Stunden nach Erreichen einer maximalen Innentemperatur von 70 °C wurde ein NCO-Gehalt von 1,28 Gew.-% bestimmt. Nach Überführen des Reaktionsgemisches in die 4l-Destillationsapparatur und Nachspülen mit 49,9 g Aceton, wurde das Reaktionsgemisch bei einer Temperatur von 48 °C und mit 43,1 g einer 40 gew.-%igen wässrigen PUD-Salz-Lösung versetzt und mit 669,8 g entionisiertem Wasser dispergiert.

Die nach der Destillation erhaltene Polyurethandispersion wies einen Feststoffgehalt von 43,8 Gew.-% und einen pH-Wert von 8,0 auf. Die mittlere Teilchengröße wurde zu 82 nm bestimmt.

Dispersion 34 (D34)

Die Herstellung von D34 erfolgte völlig analog zur Herstellung von D1 mit dem Unterschied, dass 244,4 g Lupraphen 7600/1, 16,3 g Hydroxyethlymethacrylat, 14,1 g Laromer LR 8765, 14,1 g Ebecryl 3700, 23,3 g 1,4-Butandiol, 23,3 g (Dimethylol)propionsäure, 37,3 g Methylethylketon, 0,50 g Kerobit BHT, 0,05 g TEMPOL und 0,66 g Borchi Kat 315 in den 2l-Reaktor vorgelegt und aufgeheizt wurden. Beginnend mit einer Innentemperatur von 52 °C wurden 160,2 g Isophorondiisocyanat innerhalb von 5 Minuten zugetropft und danach die Zulaufleitung mit 17,3 g Methylethylketon gespült. 5 Stunden nach Erreichen einer maximalen Innentemperatur von 100 °C wurde das Reaktionsgemisch (ohne weitere Zugabe von Katalysator und ohne weiteres Heizen) mit 481,5 g Aceton verdünnt. Es wurde ein NCO-Gehalt von 0,28 Gew.-% bestimmt. Nach Überführen des Reaktionsgemisches in die 4l-Destillationsapparatur wurde das Reaktionsgemisch mit 17,3 g Diethylethanolamin und 750,0 g entionisiertem Wasser versetzt. Darüber hinaus wurden nach der Destillation weitere 100,0 g entionisiertes Wasser zugegeben.

Die dabei erhaltene Polyurethandispersion wies einen Feststoffgehalt von 39,0 Gew.-% und einen pH-Wert von 7,5 auf. Die mittlere Teilchengröße wurde zu 84 nm bestimmt.

Dispersion 35 (D35)

Die Herstellung von D35 erfolgte völlig analog zur Herstellung von D1 mit dem Unterschied, dass 202,4 g Lupraphen 7600/1, 23,9 g (Dimethylol)propionsäure, 18,0 g Hydroxyethylacrylat, 38,7 g Methylethylketon, 0,50 g Kerobit BHT und 0,05 g TEMPOL in den 2l-Reaktor vorgelegt und aufgeheizt wurden. Beginnend mit einer Innentemperatur von 43 °C wurden 154,9 g Isophorondiisocyanat innerhalb von 5 Minuten zugetropft und danach die Zulaufleitung mit 16,7 g Methylethylketon gespült. 1 Stunde und 25 Minuten nach Zulauf des Isophorondiisocyanats wurden 104,1 g Laromer LR 8765 zugegeben. 8,5 Stunden nach Erreichen einer steigenden Temperatur von 86 °C wurde das Reaktionsgemisch (ohne weitere Zugabe von Katalysator und ohne weiteres Heizen) mit 481,2 g Aceton verdünnt. Es wurde ein NCO-Gehalt von 0,39 Gew.-% bestimmt. Nach Überführen des Reaktionsgemisches in die 4l-Destillationsapparatur wurde das Reaktionsgemisch mit 18,8 g Diethylethanolamin und 740,9 g entionisiertem Wasser versetzt. Darüber hinaus wurden während der Destillation weitere 250 g entionisiertes Wasser zugegeben.

Die nach der Destillation erhaltene Polyurethandispersion wies einen Feststoffgehalt von 32,9 Gew.-% und einen pH-Wert von 7,2 auf. Die mittlere Teilchengröße wurde zu 36 nm bestimmt.

Dispersion 36 (D36)

Die Herstellung von D36 erfolgte völlig analog zur Herstellung von D1 mit dem Unterschied, dass 279,4 g Lupraphen 7600/1, 22,3 g (Dimethylol)propionsäure, 72,8 g Ebecryl 3700, 41,6 g Methylethylketon, 0,50 g Kerobit BHT

und 0,05 g TEMPOL in den 2l-Reaktor vorgelegt und aufgeheizt wurden. Beginnend mit einer Innentemperatur von 60 °C wurden 121,5 g Isophorondiisocyanat innerhalb von 5 Minuten zugetropft und danach die Zulaufleitung mit 13,0 g Methylethylketon gespült. 3 Stunden und 15 Minuten nach Erreichen einer maximalen Innentemperatur von 102 °C wurde das Reaktionsgemisch (ohne weitere Zugabe von Katalysator und ohne weiteres Heizen) mit 474,2 g Aceton verdünnt. Es wurde ein NCO-Gehalt von 0,85 Gew.-% bestimmt. Nach Überführen des Reaktionsgemisches in die 4l-Destillationsapparatur wurde das Reaktionsgemisch mit 1,4 g Isopohrondiamin, 17,5 g Diethylethanolamin, 731,0 g entionisiertem Wasser und einer Lösung aus 3,8 g Diethylentriamin und 21,3g entionisiertem Wasser versetzt. Darüber hinaus wurden während der Destillation weitere 50 g entionisiertes Wasser zugegeben.

Die nach der Destillation erhaltene Polyurethandispersion wies einen Feststoffgehalt von 38,0 Gew.-% und einen pH-Wert von 8,0 auf. Die mittlere Teilchengröße wurde zu 31 nm bestimmt.

Dispersion 37 (D37)

Die Herstellung von D37 erfolgte völlig analog zur Herstellung von D1 mit dem Unterschied, dass 273,9 g Lupraphen 7600/1, 36,4 g Hydroxyethylmethacrylat, 12,3 g 1,4-Butandiol, 26,1 g (Dimethylol)propionsäure, 38,7 g Methylethylketon, 0,49 g Kerobit BHT, 0,05 g TEMPOL und 0,65 g Borchi Kat 315 in den 2l-Reaktor vorgelegt und aufgeheizt wurden. Beginnend mit einer Innentemperatur von 52 °C wurden 141,8 g Isophorondiisocyanat innerhalb von 5 Minuten zugetropft und danach die Zulaufleitung mit 15,2 g Methylethylketon gespült. 2,5 Stunden nach Erreichen einer maximalen Innentemperatur von 105 °C wurde das Reaktionsgemisch (ohne weitere Zugabe von Katalysator und ohne weiteres Heizen) mit 476,1 g Aceton verdünnt. Es wurde ein NCO-Gehalt von 0,25 Gew.-% bestimmt. Nach Überführen des Reaktionsgemisches in die 4l-Destillationsapparatur wurde das Reaktionsgemisch mit 22,6 g Diethylethanolamin und 755,8 g entionisiertem Wasser versetzt.

Die nach der Destillation erhaltene Polyurethandispersion wies einen Feststoffgehalt von 46,2 Gew.-% und einen pH-Wert von 7,6 auf. Die mittlere Teilchengröße wurde zu 45 nm bestimmt.

Vergleichsbeispiel 1 (V1)

Die Herstellung von V1 erfolgte völlig analog zur Herstellung von D1 mit dem Unterschied, dass 114,6 g Lupraphen 7800/1, 68,9 g 1-Propanol, 55,3 g 1,4-Butandiol, 187,6 g Aceton, 0,89 g Kerobit BHT, 0,06 g TEMPOL, 0,51g MEHQ und 0,39 g Borchi Kat 315 in den 2l-Reaktor vorgelegt und aufgeheizt wurden. Beginnend mit einer Innentemperatur von 49 °C wurden 270,4 g Isophorondiisocyanat und 81,1 g Basonat HI 100 innerhalb von 15 Minuten zugetropft. 1 Stunde und 35 Minuten nach Zulauf des Isophorondiisocyanats und des Basonats HI 100 wurden weitere 0,2 g Borchi Kat 315 zugegeben. Nach einer Gesamtreaktionszeit von 4 Stunden und 24 Minuten bei einer konstanten Innentemperatur von 68 bis 73°C wurde ein NCO-Gehalt von 1,54 Gew.-% bestimmt. Nach Überführen des Reaktionsgemisches in die 4l-Destillationsappartur und Nachspülen mit 88,4 g Aceton wurde das Reaktionsgemisch bei 49 °C mit 54,1 g einer 40 gew.-%igen wässrigen PUD-Salz-Lösung versetzt und mit weiteren 877,5 g entionisiertem Wasser dispergiert. Darüber hinaus wurden während der Destillation weitere 400 g entionisiertes Wasser zugegeben.

Die nach der Destillation erhaltene Polyurethandispersion wies einen Feststoffgehalt von 34,0 Gew.-% und einen pH-Wert von 9,5 auf. Die mittlere Teilchengröße wurde zu 126 nm bestimmt.

Anwendungstechnische Untersuchungen

Bestimmung der Filmhärte

Einer Teilmenge der Polyurethandispersionen D1 bis D37 sowie V1 wurden unter Rühren bei Raumtemperatur jeweils 2,5 Gew.-% an Adipinsäuredihydrazid (ADDH), jeweils bezogen auf den Polyurethanfeststoffgehalt der entsprechenden Polyurethandispersion, zugesetzt. Eine andere Teilmenge der Polyurethandispersionen D1 bis D37 sowie V1 wurden ohne Zusatz von ADDH eingesetzt. Wiesen dabei die additivierten Polyurethandispersionen bzw. die nichtaddivierten Polyurethandispersionen eine Auslaufzeit von kleiner 20 Sekunden auf, gemessen mit Erichsen DIN-Becher 4 nach DIN 53211, so wurde diesen soviel Rheovis PE 1330 zugesetzt, bis sie eine Viskosität im Bereich ≥ 20 und ≤ 60 Sekunden aufwiesen (übliches Applikationsniveau).

Die erhaltenen additivierten bzw. nicht-additivierten wässrigen Polyurethandispersionen D1 bis D37 sowie V1 wurden unmittelbar nach ihrer Herstellung bzw. vor ihrer Applizierung für 5 Minuten bei 3500 rpm mit einem Speedmixer DAC 150.1 FVZ homogen durchmischt. Daran anschließend wurden die erhaltenen additivierten bzw. nicht-additivierten wässrigen Polyurethandispersionen bei Raumtemperatur mit einem 300 μm Kastenrakel auf eine fettfreie 10 x 8 cm-Glasplatte aufgetragen. Die dabei erhaltenen Nassfilme wurden - wie in nachfolgender Tabelle 1 angegeben - entweder bei Raumtemperatur und 60 % relativer Luftfeuchtigkeit im Klimaraum in Dunkelheit getrocknet und für die ebenfalls in Tabelle 1 angegebene Zeit gelagert oder bei der angegebenen Temperatur für 30 Minuten getrocknet und verfilmt und

anschließend im Klimaraum in Dunkelheit bei Raumtemperatur und 60 % relativer Luftfeuchtigkeit für die in der Tabelle ebenfalls angegebene Zeitdauer gelagert. Die dabei nach der Trocknung und Lagerung erhaltenen Filmschichtdicken lagen im Bereich von 40 bis 100 µm.

Von den nach Trocknung und Lagerung erhaltenen Polymerfilmen wurde die Pendeldämpfung nach König gemäß DIN EN ISO 1522 bestimmt. Dabei sind die erhaltenen Polymerfilme umso härter zu bewerten, je höher die ebenfalls in Tabelle 1 angegebene Sekundenzahl ist.

Tabelle 1: Ergebnisse der Pendeldämpfungsmessung nach König

| | | Pendeldämpfung [s] | | | |
|---|---|---|---|---|---|
| | | ohne ADDH | | mit ADDH | |
| Dispersion | Verfilmungstemperatur | 3 Tage | 6 Wochen | 3 Tage | 6 Wochen |
| D1 | Raumtemperatur | 11 | 5 | 11 | 20 |
| D2 | Raumtemperatur | 2 | 4 | 3 | 10 |
| D3 | Raumtemperatur | 11 | 10 | 13 | 25 |
| D4 | 40 °C | 104 | 97 | 104 | 113 |
| D5 | 60 °C | 17 | 17 | 20 | 43 |
| D6 | 60 °C | 66 | 64 | 63 | 77 |
| D7 | 40 °C | 83 | 90 | 67 | 104 |
| D8 | Raumtemperatur | 8 | 11 | 7 | 17 |
| D9 | Raumtemperatur | 39 | 46 | 36 | 83 |
| D10 | Raumtemperatur | 2 | 2 | 2 | 4 |
| D11 | 60 °C | 50 | 57 | 49 | 67 |
| D12 | Raumtemperatur | 66 | 63 | 57 | 95 |
| D13 | Raumtemperatur | 3 | 8 | 3 | 11 |
| D14 | Raumtemperatur | 8 | 8 | 7 | 22 |
| D15 | Raumtemperatur | 77 | 84 | 46 | 91 |
| D16 | 60 °C | 87 | 92 | 74 | 98 |
| D17 | Raumtemperatur | 4 | 8 | 6 | 22 |
| D18 | 60 °C | 31 | 38 | 25 | 69 |
| D19 | Raumtemperatur | 4 | 7 | 7 | 18 |
| D20 | 60 °C | 32 | 28 | 29 | 53 |
| D21 | 40 °C | 3 | 5 | 4 | 17 |
| D22 | 60 °C | 24 | 21 | 18 | 43 |
| D23 | 80 °C | 126 | 136 | 122 | 143 |
| D24 | 60 °C | 32 | 38 | 34 | 80 |
| D25 | 60 °C | 39 | 48 | 41 | 95 |
| D26 | 60 °C | 91 | 105 | 94 | 133 |
| D27 | 40 °C | 36 | 34 | 36 | 67 |
| D28 | Raumtemperatur | 34 | 38 | 34 | 66 |
| D29 | Raumtemperatur | 29 | 34 | 31 | 67 |
| D30 | 40 °C | 76 | 99 | 63 | 116 |
| D31 | 60 °C | 92 | 98 | 91 | 112 |
| D32 | 40 °C | 63 | 76 | 57 | 123 |
| D33 | 40 °C | 55 | 60 | 66 | 112 |
| D34 | Raumtemperatur | 28 | 24 | 22 | 34 |
| D35 | Raumtemperatur | 24 | 14 | 28 | 36 |
| D36 | Raumtemperatur | 48 | 35 | 45 | 49 |
| D37 | Raumtemperatur | 8 | 11 | 8 | 14 |
| V1 | 40 °C | 67 | 66 | 60 | 62 |

Aus den vorgenannten Ergebnissen wird klar, dass alle aus ADDH-additivierten acryloyloxyfunktionalisierten Polyurethanen hergestellten Polymerfilme spätestens nach einer Lagerzeit von 6 Wochen eine - im Vergleich zu den

aus den entsprechenden nichtadditivierten Polyurethandispersionen hergestellten Polymerfilmen - erhöhte Pendelhärte aufweisen.

Das Polyurethan der Vergleichsdispersion V1 weist keinerlei Acrylolyoxygruppen auf. Auffällig an den entsprechenden Ergebnissen ist, dass in diesem Fall die Filmhärten der nichtadditivierten Polyurethandispersion sogar höher sind als die entsprechenden Filmhärten der ADDHadditiverten Polyurethandispersion, was sich beispielsweise durch die Einlagerung von nichtabreagiertem ADDH im Polymerfilm erklären lässt.

Verwendung unterschiedlicher Hydrazid-Verbindungen

Hierzu wurden bei Raumtemperatur jeweils 50 g Polyurethandispersion D33 mit 0,5 g Rheovis PE1330 und den entsprechenden Hydrazid-Verbindungen versetzt. Unmittelbar danach wurde die jeweilige Mischung für 5 Minuten bei 3500 rpm mit einem Speedmixer DAC 150.1 FVZ homogen durchmischt. Als Hydrazid-Verbindungen wurden 0,51 g Adipinsäuredihydrazid (D33-1), 0,29 g Carbodihydrazid (D33-2), 0,57 g Isophthalsäuredihydrazid (D33-3) und 0,44 g Acethydrazid (D33-4) eingesetzt. Die Abmischung aus 50 g Polyurethandispersion D33 mit 0,5 g Rheovis PE1330 ohne Hydrazid-Zusatz wurde als Vergleich herangezogen (D33-V).

Unmittelbar nach ihrer Herstellung wurden die vorgenannten Formulierungen D33-1 bis D33-4 sowie D33-V bei Raumtemperatur mit einem 300 μm Kastenrakel auf eine fettfreie Glasplatte aufgetragen. Die dabei erhaltenen Nassfilme wurden zuerst für 30 Minuten bei Raumtemperatur und danach für weitere 30 Minuten bei 60 °C im Trockenschrank getrocknet. Daran anschließend wurden die erhaltenen Polymerfilme im Klimaraum in Dunkelheit bei Raumtemperatur und 60 % relativer Luftfeuchtigkeit für die in der Tabelle 2 angegebene Zeitdauer gelagert. Die dabei nach der Trocknung und Lagerung erhaltenen Filmschichtdicken lagen im Bereich von 40 bis 100 μm.

Von den nach Trocknung und Lagerung erhaltenen Polymerfilmen der verwendeten Formulierungen D33-1 bis D33-4 sowie D33-V wurden die Pendeldämpfung nach König gemäß DIN EN ISO 1522 bestimmt. Die dabei erhaltenen Ergebnisse sind ebenfalls in Tabelle 2 angegeben.

Tabelle 2: Ergebnisse der Pendeldämpfung in Abhängigkeit der verwendeten Carbonsäurehydrazide

| | Pendeldämpfung [s] | |
|---|---|---|
| Formulierung | 3 Tage | 6 Wochen |
| D33-1 | 15 | 87 |
| D33-2 | 22 | 90 |
| D33-3 | 15 | 48 |
| D33-4 | 16 | 64 |
| D33-V | 13 | 25 |

Aus den erhaltenen Ergebnissen ist klar ersichtlich, dass alle mit einem Carbonsäurehydrazid versetzten Formulierungen härtere Polymerfilme ausbilden als die nicht-additivierte Formulierung D33-V.

## Patentansprüche

**1.** Wässrige Bindemittelformulierung enthaltend

a) ein Polyurethan A, und
b) ein Carbonsäurehydrazid B, wobei
das Polyurethan A erhältlich ist durch Umsetzung von

a1) wenigstens einem Di- und/oder Polyisocyanat (Komponente A1), mit
a2) wenigstens einer organischen Verbindung mit wenigstens zwei Hydroxygruppen, welche sich von den Komponenten A3, A4 und A6 unterscheidet (Komponente A2),
a3) wenigstens einer organischen Verbindung mit wenigstens einer gegenüber einer Isocyanatgruppe reaktiven Gruppe und wenigstens einer dispergierend wirkenden Gruppe oder wenigstens einer in eine dispergierend wirkende Gruppe überführbare funktionelle Gruppe, welche sich von den Komponenten A2, A4 und A6 unterscheidet (Komponente A3),
a4) wenigstens einer organischen Verbindung mit wenigstens einer gegenüber einer Isocyanatgruppe reaktiven Gruppe und wenigstens einer gegebenenfalls substituierten Acryloyloxygruppe, welche sich von

den Komponenten A2, A3 und A6 unterscheidet (Komponente A4),
a5) optional wenigstens einer organischen Verbindung mit lediglich einer gegenüber einer Isocyanatgruppe reaktiven Gruppe, welche sich von den Komponenten A3 und A4 unterscheidet (Komponente A5), und
a6) optional wenigstens einer organischen Verbindung mit wenigstens zwei gegenüber einer Isocyanatgruppe reaktiven Gruppen, welche sich von den Komponenten A2 bis A4 unterscheidet (Komponente A6),

wobei keine der Komponenten A1 bis A6 eine oder mehrere aldehydische und/oder ketonische Carbonylgruppen enthält.

**2.** Wässrige Bindemittelformulierung gemäß Anspruch 1, **dadurch gekennzeichnet, dass** als Komponente A1 wenigstens ein aliphatisches Di- und/oder Polyisocyanat eingesetzt wird.

**3.** Wässrige Bindemittelformulierung gemäß Anspruch 1 oder 2, **dadurch gekennzeichnet, dass** als Komponente A2 wenigstens eine molekulare Verbindung mit einem Molekulargewicht ≤ 500 g/mol und/oder wenigstens eine polymere Verbindung mit einem mittleren Molekulargewicht > 500 g/mol eingesetzt wird.

**4.** Wässrige Bindemittelformulierung gemäß Anspruch 3, **dadurch gekennzeichnet, dass** als wenigstens eine polymere Komponente A2 ein Polyesterol, ein Polyetherol und/oder ein Polycarbonatol eingesetzt wird, dessen OH-Zahl, gemessen analog DIN EN ISO 4629-1, im Bereich ≥ 40 und ≤ 200 mg KOH/g Polymer und dessen Säurezahl, gemessen nach DIN 53240, im Bereich < 20 mg KOH/g Polymer liegt.

**5.** Wässrige Bindemittelformulierung gemäß einem der Ansprüche 1 bis 4, **dadurch gekennzeichnet, dass** Komponente A3 als wenigstens eine gegenüber einer Isocyanatgruppe reaktive Gruppe wenigstens eine Hydroxy- und/oder wenigstens eine primäre Aminogruppe und als wenigstens eine dispergierend wirkende Gruppe oder wenigstens eine in eine dispergierend wirkende Gruppe überführbare funktionelle Gruppe wenigstens eine Säuregruppe aufweist.

**6.** Wässrige Bindemittelformulierung gemäß einem der Ansprüche 1 bis 5, **dadurch gekennzeichnet, dass** Komponente A4 als wenigstens eine gegenüber einer Isocyanatgruppe reaktive Gruppe wenigstens eine Hydroxygruppe und als wenigstens eine gegebenenfalls substituierte Acryloyloxygruppe wenigstens eine unsubstituierte Acryloyloxygruppe aufweist.

**7.** Wässrige Bindemittelformulierung gemäß einem der Ansprüche 1 bis 6, **dadurch gekennzeichnet, dass** als Komponente A5 wenigstens ein aliphatischer $C_1$- bis $C_6$-Alkohol eingesetzt wird.

**8.** Wässrige Bindemittelformulierung gemäß einem der Ansprüche 1 bis 7, **dadurch gekennzeichnet, dass** als Komponente A6 wenigstens eine aliphatische Verbindung eingesetzt wird, welche wenigstens eine primäre und/oder wenigstens eine sekundäre Aminogruppe aufweist.

**9.** Wässrige Bindemittelformulierung gemäß einem der Ansprüche 1 bis 8, **dadurch gekennzeichnet, dass** das Carbonsäurehydrazid B eine Löslichkeit von ≥ 5 g/l entionisiertem Wasser bei 20 °C und 1,013 bar (absolut) aufweist.

**10.** Wässrige Bindemittelformulierung gemäß einem der Ansprüche 1 bis 9, **dadurch gekennzeichnet, dass** als Carbonsäurehydrazid B das Dihydrazid einer aliphatischen Dicarbonsäure eingesetzt wird.

**11.** Wässrige Bindemittelformulierung gemäß einem der Ansprüche 1 bis 11, **dadurch gekennzeichnet, dass** die Komponenten A1 bis A6 in Art und Menge so gewählt werden, dass das Verhältnis der Summe der äquivalenten Mengen der gegenüber einer Isocyanatgruppe reaktiven Gruppen der Komponenten A2 bis A6 zu der äquivalenten Menge der Isocyanatgruppen der Komponente A1 im Bereich ≥ 0,8 und ≤ 1,2 liegt.

**12.** Wässrige Bindemittelformulierung gemäß einem der Ansprüche 1 bis 11, **dadurch gekennzeichnet, dass** die Art und Mengen des Polyurethans A und des Carbonsäurehydrazids B so gewählt werden, dass das äquivalente Verhältnis der gegebenenfalls substituierten Acryloyloxygruppen aus Komponente A4 zu den Hydrazidgruppen des Carbonsäurehydrazids B im Bereich ≥ 0,1 und ≤ 100 liegt.

**13.** Verwendung einer wässrigen Bindemittelformulierung gemäß einem der Ansprüche 1 bis 12 als Bindemittel bei der Herstellung von Klebstoffen, Dichtmassen, Kunstharzputzen, Papierstreichmassen, Faservliesen, flexiblen Dachbeschichtungen, Druckfarben und Beschichtungsmitteln sowie bei der Sandverfestigung, als Komponente bei der

Herstellung von Textil- oder Lederhilfsmitteln und Schlagzähmodifier oder zur Modifizierung von mineralischen Bindemitteln und Kunststoffen.

14. Verfahren zum Beschichten von Substraten, **dadurch gekennzeichnet, dass** eine wässrige Bindemittelformulierung gemäß einem der Ansprüche 1 bis 12 auf ein Substrat aufgebracht, anschließend getrocknet und dabei mit oder ohne Einwirkung von energiereicher Strahlung [Elektronenstrahlung und/oder UV-Strahlung] gehärtet wird.

15. Beschichtetes Substrat erhältlich nach einem Verfahren gemäß Anspruch 14.

## Claims

1. An aqueous binder formulation comprising

   a) a polyurethane A, and
   b) a carboxylic acid hydrazide B, wherein
   the polyurethane A can be obtained by reacting

      a1) at least one diisocyanate and/or polyisocyanate (component A1) with
      a2) at least one organic compound having at least two hydroxyl groups, which differs from components A3, A4 and A6 (component A2),
      a3) at least one organic compound having at least one group reactive to an isocyanate group and at least one dispersing group or at least one functional group which can be converted to a dispersing group and which differs from components A2, A4 and A6 (component A3),
      a4) at least one organic compound having at least one group reactive to an isocyanate group and at least one optionally substituted acryloyloxy group, which differs from components A2, A3 and A6 (component A4),
      a5) optionally at least one organic compound having only one group reactive to an isocyanate group, which differs from components A3 and A4 (component A5), and
      a6) optionally at least one organic compound having at least two groups reactive to an isocyanate group, which differs from components A2 to A4 (component A6),

   wherein none of the components A1 to A6 comprises one or more aldehydic and/or ketonic carbonyl groups.

2. The aqueous binder formulation according to claim 1, wherein component A1 used is at least one aliphatic diisocyanate and/or polyisocyanate.

3. The aqueous binder formulation according to claim 1 or 2, wherein component A2 used is at least one molecular compound having a molecular weight ≤ 500 g/mol and/or at least one polymeric compound having an average molecular weight > 500 g/mol.

4. The aqueous binder formulation according to claim 3, wherein the at least one polymeric component A2 used is a polyesterol, a polyetherol and/or a polycarbonatol, the OH number of which, measured analogously to DIN EN ISO 4629-1, is in the range ≥ 40 and ≤ 200 mg KOH/g of polymer and the acid number of which, measured in accordance with DIN 53240, is in the range < 20 mg KOH/g of polymer.

5. The aqueous binder formulation according to any of claims 1 to 4, wherein component A3 has at least one hydroxyl and/or at least one primary amino group as the at least one group reactive to an isocyanate group and has at least one acid group as the at least one dispersing group or the at least one functional group which can be converted to a dispersing group.

6. The aqueous binder formulation according to any of claims 1 to 5, wherein component A4 has at least one hydroxyl group as the at least one group reactive to an isocyanate group and has at least one unsubstituted acryloyloxy group as the at least one optionally substituted acryloyloxy group.

7. The aqueous binder formulation according to any of claims 1 to 6, wherein component A5 used is at least one aliphatic $C_1$- to $C_6$-alcohol.

8. The aqueous binder formulation according to any of claims 1 to 7, wherein component A6 used is at least one

aliphatic compound which has at least one primary and/or at least one secondary amino group.

**9.** The aqueous binder formulation according to any of claims 1 to 8, wherein the carboxylic acid hydrazide B has a solubility of ≥ 5 g/l of deionized water at 20°C and 1.013 bar (absolute).

**10.** The aqueous binder formulation according to any of claims 1 to 9, wherein the carboxylic acid hydrazide B used is the dihydrazide of an aliphatic dicarboxylic acid.

**11.** The aqueous binder formulation according to any of claims 1 to 11, wherein components A1 to A6 are selected in type and amount such that the ratio of the sum of the equivalent amounts of the groups, reactive to an isocyanate group, of components A2 to A6 to the equivalent amount of the isocyanate groups of component A1 is in the range ≥ 0.8 and ≤ 1.2.

**12.** The aqueous binder formulation according to any of claims 1 to 11, wherein the type and amounts of the polyurethane A and of the carboxylic acid hydrazide B are selected such that the equivalent ratio of the optionally substituted acryloyloxy groups of component A4 to the hydrazide groups of the carboxylic acid hydrazide B is in the range ≥ 0.1 and ≤ 100.

**13.** The use of an aqueous binder formulation according to any of claims 1 to 12 as binder in the production of adhesives, sealants, renders, paper coating slips, fiber nonwovens, flexible roof coatings, printing inks and coating compositions and in sand consolidation, as a component in the production of textile or leather auxiliaries and impact modifiers or to modify mineral binders and plastics.

**14.** A process for coating substrates, wherein an aqueous binder formulation according to any of claims 1 to 12 is applied to a substrate, then dried and cured with or without exposure to high-energy radiation [electron beams and/or UV radiation].

**15.** A coated substrate obtainable by a process according to claim 14.

## Revendications

**1.** Formulation aqueuse d'agent liant, contenant

a) un polyuréthane A et
b) un hydrazide d'acide carboxylique B,
le polyuréthane A pouvant être obtenu par transformation de

a1) au moins un diisocyanate et/ou polyisocyanate (composant A1) avec
a2) au moins un composé organique comprenant au moins deux groupes hydroxy, qui se distingue des composants A3, A4 et A6 (composant A2),
a3) au moins un composé organique comprenant au moins un groupe réactif vis-à-vis d'un groupe isocyanate et au moins un groupe à action dispersante ou au moins un groupe fonctionnel pouvant être transformé en groupe à action dispersante, qui se distingue des composés A2, A4 et A6 (composant A3),
a4) au moins un composé organique comprenant au moins un groupe réactif vis-à-vis d'un groupe isocyanate et au moins un groupe acryloyloxy, le cas échéant substitué, qui se distingue des composés A2, A3 et A6 (composant A4),
a5) éventuellement au moins un composé organique comprenant seulement un groupe réactif vis-à-vis d'un groupe isocyanate, qui se distingue des composés A3 et A4 (composant A5) et
a6) éventuellement au moins un composé organique comprenant au moins deux groupes réactifs vis-à-vis d'un groupe isocyanate, qui se distingue des composés A2 à A4 (composant A6),

aucun des composants A1 à A6 ne contenant un ou plusieurs groupes carbonyle de type aldéhyde et/ou cétone.

**2.** Formulation aqueuse d'agent liant selon la revendication 1, **caractérisée en ce qu'**au moins un diisocyanate et/ou polyisocyanate aliphatique est utilisé en tant que composant A1.

**3.** Formulation aqueuse d'agent liant selon la revendication 1 ou 2, **caractérisée en ce qu'**au moins un composé

moléculaire présentant un poids moléculaire ≤ 500 g/mole et/ou au moins un composé polymère présentant un poids moléculaire moyen > 500 g/mole est utilisé en tant que composant A2.

4. Formulation aqueuse d'agent liant selon la revendication 3, **caractérisée en ce qu'**un polyesterol, polyétherol et/ou polycarbonatol est utilisé en tant qu'au moins un composant polymère A2, dont l'indice d'OH, mesuré selon la norme DIN EN ISO 4629-1, se situe dans la plage ≥ 40 et ≤ 200 mg de KOH/g de polymère et dont l'indice d'acide, mesuré selon la norme DIN 53240, se situe dans la plage < 20 mg de KOH/g de polymère.

5. Formulation aqueuse d'agent liant selon l'une quelconque des revendications 1 à 4, **caractérisée en ce que** le composant A3 présente, en tant qu'au moins un groupe réactif vis-à-vis d'un groupe isocyanate, au moins un groupe hydroxy et/ou au moins un groupe amino primaire et, en tant qu'au moins un groupe à action dispersante ou au moins un groupe fonctionnel pouvant être transformé en groupe à action dispersante, au moins un groupe acide.

6. Formulation aqueuse d'agent liant selon l'une quelconque des revendications 1 à 5, **caractérisée en ce que** le composant A4 présente, en tant qu'au moins un groupe réactif vis-à-vis d'un groupe isocyanate, au moins un groupe hydroxy et, en tant qu'au moins un groupe acryloyloxy le cas échéant substitué, au moins un groupe acryloyloxy non substitué.

7. Formulation aqueuse d'agent liant selon l'une quelconque des revendications 1 à 6, **caractérisée en ce qu'**au moins un $C_1$-$C_6$-alcool aliphatique est utilisé en tant que composant A5.

8. Formulation aqueuse d'agent liant selon l'une quelconque des revendications 1 à 7, **caractérisée en ce qu'**au moins un composé aliphatique, qui présente au moins un groupe amino primaire et/ou au moins un groupe amino secondaire, est utilisé en tant que composant A6.

9. Formulation aqueuse d'agent liant selon l'une quelconque des revendications 1 à 8, **caractérisée en ce que** l'hydrazide d'acide carboxylique B présente une solubilité ≥ 5 g/l d'eau désionisée à 20°C et à 1,013 bar (absolu).

10. Formulation aqueuse d'agent liant selon l'une quelconque des revendications 1 à 9, **caractérisée en ce que** le dihydrazide d'un acide dicarboxylique aliphatique est utilisé en tant qu'hydrazide d'acide carboxylique B.

11. Formulation aqueuse d'agent liant selon l'une quelconque des revendications 1 à 11, **caractérisée en ce que** les composants A1 à A6 sont choisis, en type et en quantité, de manière telle que le rapport de la somme des quantités équivalentes des groupes réactifs vis-à-vis d'un groupe isocyanate des composants A2 à A6 à la quantité équivalente des groupes isocyanate du composant A1 se situe dans la plage ≥ 0,8 et ≤ 1,2.

12. Formulation aqueuse d'agent liant selon l'une quelconque des revendications 1 à 11, **caractérisée en ce que** le type et les quantités du polyuréthane A et de l'hydrazide d'acide carboxylique B sont choisis de manière telle que le rapport équivalent des groupes acryloyloxy le cas échéant substitués du composant A4 aux groupes hydrazide de l'hydrazide d'acide carboxylique B se situe dans la plage ≥ 0,1 et ≤ 100.

13. Utilisation d'une formulation aqueuse d'agent liant selon l'une quelconque des revendications 1 à 12 en tant qu'agent liant lors de la production d'adhésifs, de masses d'étanchéité, d'enduits à base de résine synthétique, de masses de couchage de papier, de non-tissés fibreux, de revêtements souples pour toiture, d'encres d'imprimerie et d'agents de revêtement ainsi que lors de la solidification du sable, en tant que composant lors de la production d'adjuvants pour textile ou cuir et d'agent de modification de la résistance au choc ou pour la modification de liants et de matériaux synthétiques minéraux.

14. Procédé pour le revêtement de substrats, **caractérisé en ce qu'**une formulation aqueuse d'agent liant selon l'une quelconque des revendications 1 à 12 est appliquée sur un substrat, ensuite séchée et durcie avec ou sans action d'un rayonnement riche en énergie [rayonnement électronique et/ou rayonnement UV].

15. Substrat revêtu, pouvant être obtenu selon un procédé selon la revendication 14.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 98752 A
- DE 2936039 A
- EP 694531 A
- DE 19525489 A
- DE 19810793 A
- DE 19933012 A
- DE 19957604 A
- EP 1591502 A
- DE 102010003308
- WO 201463920 A
- WO 2008098972 A
- WO 2010018074 A
- EP 332326 A
- WO 2016000989 A
- CN 101544738
- DE 10013186 A
- DE 10013187 A
- EP 703255 A
- DE 19724199 A
- DE 4010783 A
- DE 4113160 A
- EP 548669 A
- WO 03035596 A
- EP 7508 A
- EP 57474 A
- DE 19618720 A
- EP 495751 A
- EP 615980 A
- WO 2010063612 A1
- DE 19957900 A


### In der Beschreibung aufgeführte Nicht-Patentliteratur


- Katalysatoren. Polyurethane. Carl Hanser Verlag, 1993, 104-110
- **BLANK et al.** *Progress in Organic Coatings,* 1999, vol. 35, 19-29
- Advances in Polymer Science. Springer, 1974, vol. 14
- **K. K. DIETLIKER.** Chemistry and Technology of UV- and EB-Formulation for Coatings. *Inks and Paints,* vol. 3
- Photoinitiators for Free Radical and Cationic Polymerization. SITA Technology Ltd